(19) **Europäisches Patentamt**
**European Patent Office**
**Office européen des brevets**

(11) **EP 4 424 767 B1**

(12) **EUROPEAN PATENT SPECIFICATION**

(45) Date of publication and mention
of the grant of the patent:
**08.10.2025 Bulletin 2025/41**

(21) Application number: **23158933.4**

(22) Date of filing: **28.02.2023**

(51) International Patent Classification (IPC):
*C08L 23/12* (2006.01)     *C08F 210/06* (2006.01)
*C08F 110/06* (2006.01)     *C08F 2/00* (2006.01)
*C08L 23/14* (2006.01)     *C08F 10/00* (2006.01)

(52) Cooperative Patent Classification (CPC):
(C-Sets available)
**C08L 23/12; C08F 10/00; C08F 110/06;
C08F 210/06;** C08L 2205/035; C08L 2207/02;
C08L 2207/20                    (Cont.)

(54) **POLYPROPYLENE COMPOSITION SUITABLE FOR AUTOMOTIVE APPLICATIONS**

POLYPROPYLENZUSAMMENSETZUNG FÜR KRAFTFAHRZEUGANWENDUNGEN

COMPOSITION DE POLYPROPYLÈNE APPROPRIÉE POUR DES APPLICATIONS AUTOMOBILES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**04.09.2024 Bulletin 2024/36**

(73) Proprietor: **Borealis GmbH
1020 Vienna (AT)**

(72) Inventors:
• **MILEVA, Daniela
4021 Linz (AT)**

• **BRAUN, Hermann
4021 Linz (AT)**
• **GRESTENBERGER, Georg
4021 Linz (AT)**

(74) Representative: **Maiwald GmbH
Elisenhof
Elisenstraße 3
80335 München (DE)**

(56) References cited:
**WO-A1-2022/034127      WO-A1-2022/258576
WO-A1-2022/258578**

(52) Cooperative Patent Classification (CPC): (Cont.)

C-Sets
**C08F 10/00, C08F 2/001;
C08F 10/00, C08F 4/6465;
C08F 10/00, C08F 4/6492;
C08F 110/06, C08F 2500/12;
C08F 110/06, C08F 2500/12, C08F 2500/35;**

**C08F 210/06, C08F 4/651;
C08F 210/06, C08F 210/16, C08F 2500/12;
C08F 210/06, C08F 210/16, C08F 2500/12,
C08F 2500/27, C08F 2500/17, C08F 2500/34,
C08F 2500/33, C08F 2500/31, C08F 2500/39;
C08L 23/12, C08L 23/14, C08L 23/12, C08L 23/14,
C08L 23/10, C08L 23/0815, C08K 3/34**

**Description**

The present invention relates to polypropylene compositions suitable especially for automotive applications comprising mixed plastics polypropylene-based blends and a low amount of inorganic fillers.

**Technical background**

Compositions suitable for the automotive industry typically contain one or more heterophasic polypropylene copolymer(s), and/or random heterophasic copolymers, and conventionally some inorganic filler.

One of the fundamental problems in polymer business is recycling. At the moment, the market for recyclates, particularly recyclates from household trash, commonly denoted PCR ('post-consumer recyclates') is somewhat limited. Starting from household trash, the sorting and separation processes employed will not allow preparing pure polymers, i.e. there will always be some contaminants, or the processes may even result in blends of different polymers. When it comes to polyolefins, which constitute the vast majority of the polymer fraction of the collected household trash, a perfect separation of polypropylene and polyethylene is hardly possible. Recycled polyolefin materials, particularly post-consumer resins, are conventionally cross-contaminated with non-polyolefin materials such as polyethylene terephthalate, polyamide, polystyrene or non-polymeric substances like wood, paper, glass or aluminum. Even worse, those post-consumer recycled polyolefin materials are readily available on a multi-ton scale but unfortunately have limited mechanical properties and frequently severe odor and/or emission problems.

For interior applications in the automotive industry materials are required which show an excellent stiffness/toughness balance, homogeneous surface appearance, low scratch visibility and last but not least low emissions. Recently, the demand of the market has expanded in direction of using recycled polyolefins in blends with virgin polymers in order to fulfil the specific requirements of a final part.

WO 2022/258576 A1, WO 2002/258578 A1 and WO 2022/034127 A1 all disclose polypropylene compositions suitable for automotive applications, which all include one or more heterophasic propylene copolymer(s), inorganic fillers and mixed plastics polypropylene-based blends, which originate from recycling streams.

European patent application EP 4 194 504 A1 is related to polypropylene compositions for automotive applications which contain mixed plastics polypropylene-based blends originating from post-consumer recycled polyolefin streams, ethylene-based plastomers and inorganic fillers, such as talc. These compositions show beneficial emissions, homogeneous surface appearance, scratch visibility and impact properties so that these compositions can replace sophisticated heterophasic polypropylene copolymers in interior automotive applications. However, these compositions include a rather high amount of inorganic filler of 15 wt.-%.

The present invention is based on the surprising finding that by carefully selecting the amounts of heterophasic propylene copolymer based virgin components HECO1 and HECO2 with different melt flow rates in polypropylene based compositions, which contain mixed plastics polypropylene-based blends originating from post-consumer recycled polyolefin streams, ethylene-based plastomers and inorganic fillers, such as talc, the amount of inorganic fillers can be significantly reduced without sacrificing any beneficial properties in behalf of emissions, homogeneous surface appearance, scratch visibility, stiffness and impact properties. To the contrary, a superior balance of properties especially in regard of homogeneous surface appearance, stiffness and impact strength can be observed.

**Summary of the invention**

The present invention relates to a composition suitable for automotive applications obtainable by blending at least components (A), (B), (C), (D) and (E):

> (A) from 5.0 to 40.0 wt.-%, preferably from 7.0 to 37.5 wt.-%, more preferably from 8.0 to 35.0 wt.-% of a first heterophasic propylene copolymer;
> (B) from more than 20.0 to 35.0 wt.-%, preferably from 21.0 to 32.5 wt.-%, more preferably from 22.0 to 31.0 wt.-% of a second heterophasic propylene copolymer;
> (C) from 10.0 wt.-% to 50.0 wt.-%, preferably 12.0 to 47.5 wt.-%, more preferably 14.0 to 46.0 wt.-% of a mixed-plastics polypropylene blend;
> (D) from 2.5 wt.-% to 15.0 wt.-%, preferably 3.5 to 12.5 wt.-%, more preferably 4.0 to 11.0 wt.-% of an ethylene-based plastomer; and
> (E) from 2.5 wt.-% to less than 12.5 wt.-%, preferably 3.5 to 12.0 wt.-%, more preferably 4.0 to 11.0 wt.-% of an inorganic filler;

> whereby all percentages refer to the total composition, and whereby
> the first heterophasic propylene copolymer (A) comprises a matrix phase and an elastomer phase dispersed therein and has

- a melt flow rate (MFR$_2$), determined according to ISO 1133 at 230 °C and 2.16 kg, in the range from 90 to 250 g/10 min; and
- an intrinsic viscosity, determined according to DIN ISO 1628/1, of the soluble fraction (iV(SF)), according to CRYSTEX QC analysis, in the range from 2.00 to 4.00 dl/g;

the second heterophasic propylene copolymer (B) comprises a matrix phase and an elastomer phase dispersed therein and has

- a melt flow rate MFR$_2$, determined according to ISO 1133 at 230 °C and 2.16 kg, in the range from 3.0 to 30 g/10 min and
- an intrinsic viscosity, determined according to DIN ISO 1628/1, of the soluble fraction (iV(SF)), according to CRYSTEX QC analysis, in the range from 4.10 to 10.00 dl/g;

the mixed-plastics polypropylene blend (C) has

- a crystalline fraction (CF) content determined according to CRYSTEX QC analysis in the range from 85.0 to 96.0 wt.-%, preferably in the range from 86.5 to 95.5 wt.-%, and
- a soluble fraction (SF) content determined according to CRYSTEX QC analysis in the range from 4.0 to 15.0 wt.-%, preferably in the range from 4.5 to 13.5 wt.-%,, whereby
- said crystalline fraction (CF) has an ethylene content (C2(CF)), as determined by FT-IR spectroscopy calibrated by quantitative $^{13}$C-NMR spectroscopy, in the range from 1.0 to 10.0 wt.-%, preferably in the range of 1.5 to 9.5 wt.-%; and
- said soluble fraction (SF) has an intrinsic viscosity (iV(SF)) in the range from 0.9 to 2.1 dl/g, preferably in the range of 1.0 to 2.0 dl/g, more preferably in the range of 1.1 to 1.9 dl/g;

the ethylene based plastomer (D) being a copolymer of ethylene with comonomer units selected from alpha-olefins having from 3 to 12 carbon atoms, preferably from alpha-olefins having from 4 to 10 carbon atoms, most preferably from 1-octene, has

- a melt flow rate of 0.2 to 2.5 g/10min, preferably 0.3 to 2.0 g/10min, determined according to ISO 1133 at 190 °C and 2.16 kg; and
- a density of 850 to 870 kg/m$^3$, preferably from 855 to 865 kg/m$^3$, determined according to ISO 1183; and

the composition has a melt flow rate MFR$_2$, determined according to ISO 1133 at 230 °C and 2.16 kg, in the range from 5.0 to less than 20.0 g/10 min, preferably from 7.5 to 19.0 g/10 min, more preferably from 9.0 to 17.5 g/10 min.

Further, the present invention relates to an article comprising the composition as described above or below in an amount of from 90 to 100 wt.-%.

Still further, the present invention relates to the use of the composition as described above or below for injection moulding of articles, preferably automotive articles, more preferably automotive interior articles.

**Definitions**

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below. Unless clearly indicated otherwise, use of the terms "a," "an," and the like refers to one or more.

Mixed plastics is defined as the presence of low amounts of compounds usually not found in virgin polypropylene blends such as polystyrenes, polyamides, polyesters, wood, paper, limonene, aldehydes, ketones, fatty acids, metals, and/or long term decomposition products of stabilizers. Virgin polypropylene blends denote blends as directly originating from the production process without intermediate use.

As a matter of definition "mixed plastics" can be equated with detectable amounts of polystyrene and/or polyamide-6 and/or limonene and/or fatty acids.

Mixed plastics thereby can originate from both post-consumer waste and industrial waste, as opposed to virgin polymers. Post-consumer waste refers to objects having completed at least a first use cycle (or life cycle), i.e. having already served their first purpose. In contrast to that, industrial waste refers to manufacturing scrap, respectively conversion scrap, which does not normally reach a consumer.

The term "virgin" denotes the newly produced materials and/or objects prior to their first use, which have not already been recycled.

The term "recycled material" such as used herein denotes materials reprocessed from "recycled waste".

A polymer blend is a mixture of two or more polymeric components. In general, the blend can be prepared by mixing the two or more polymeric components. A suitable mixing procedures known in the art is post-polymerization blending. Post-polymerization blending can be dry blending of polymeric components such as polymer powders and/or compounded polymer pellets or melt blending by melt mixing the polymeric components.

A mixed-plastic polypropylene blend indicates that the blend predominantly comprises polypropylene; however, small amounts of other plastic are present. Recyclate blends, in particular post-consumer recyclate blends, are almost always mixed-plastic blends, which reflects the efficiency of the sorting in state of the art recycling processes.

A polypropylene means a polymer being composed of units derived from propylene in an amount of more than 50 mol-%.

A polyethylene means a polymer being composed of units derived from ethylene in an amount of more than 50 mol-%.

A propylene homopolymer is a polymer, which essentially consists of propylene monomer units. Due to impurities especially during commercial polymerization processes a propylene homopolymer can comprise up to 0.1 mol% comonomer units, preferably up to 0.05 mol% comonomer units and most preferably up to 0.01 mol% comonomer units.

The term "elastomer" denotes a natural or synthetic polymer having elastic properties. The term "plastomer" denotes a natural or synthetic polymer having which combines qualities of elastomers and plastics, such as rubber-like properties with the processing ability of plastic. An ethylene based plastomer means a plastomer being composed of units derived from ethylene in an amount of more than 50 mol%.

The presence of a heterophasic nature can be easily determined by the number of glass transition points, like in dynamic-mechanical analysis (DMA), and/or high resolution microscopy, like scanning electron microscopy (SEM), transmission electron microscopy (TEM) or atomic force microscopy (AFM).

The term "XCS" refers to the xylene cold soluble fraction (XCS wt.-%) determined at 25 °C according to ISO 16152. The term "XCI" refers to the xylene cold insoluble fraction (XCI wt.-%) determined at 25 °C according to ISO 16152.

Reactor blend is a blend originating from the production in two or more reactors coupled in series or in a reactor having two or more reaction compartments. A reactor blend may alternatively result from blending in solution. A reactor blend stands in contrast to a compound as produced by melt extrusion.

If not indicated otherwise "%" refers to weight-% (wt.-%).

**Brief description of the figure**

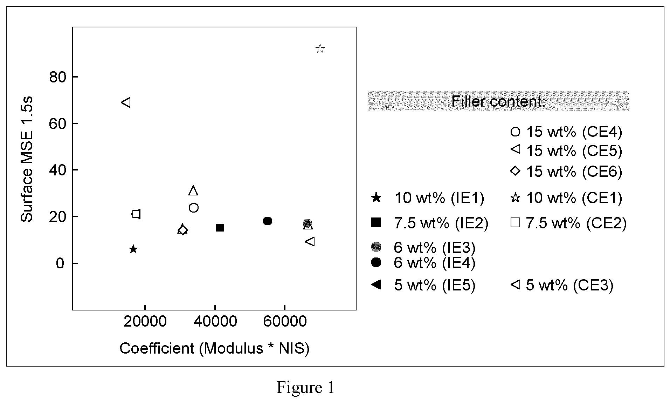

Figure 1 illustrates the balance of properties of surface appearance, stiffness and impact properties of examples IE1-IE5 and CE1-CE6 in form of a graph of tiger stripes (MSE surface quality, 1.5 s) as function of the stiffness-impact coefficient (Tensile Modulus * Charpy NIS (+23 °C)).

**Detailed description**

Composition

In a first aspect, the present invention relates to a composition suitable for automotive applications obtainable by blending at least components (A), (B), (C), (D) and (E):

(A) from 5.0 to 40.0 wt.-%, preferably from 7.0 to 37.5 wt.-%, more preferably from 8.0 to 35.0 wt.-% of a first heterophasic propylene copolymer;

(B) from more than 20.0 to 35.0 wt.-%, preferably from 21.0 to 32.5 wt.-%, more preferably from 22.0 to 31.0 wt.-% of a second heterophasic propylene copolymer;

(C) from 10.0 wt.-% to 50.0 wt.-%, preferably 12.0 to 47.5 wt.-%, more preferably 14.0 to 46.0 wt.-% of a mixed-plastics polypropylene blend;

(D) from 2.5 wt.-% to 15.0 wt.-%, preferably 3.5 to 12.5 wt.-%, more preferably 4.0 to 11.0 wt.-% of an ethylene-based plastomer; and

(E) from 2.5 wt.-% to less than 12.5 wt.-%, preferably 3.5 to 12.0 wt.-%, more preferably 4.0 to 11.0 wt.-% of an inorganic filler;

whereby all percentages refer to the total composition, and whereby
the first heterophasic propylene copolymer (A) comprises a matrix phase and an elastomer phase dispersed therein and has

- a melt flow rate ($MFR_2$), determined according to ISO 1133 at 230 °C and 2.16 kg, in the range from 90 to 250 g/10 min; and
- an intrinsic viscosity, determined according to DIN ISO 1628/1, of the soluble fraction (iV(SF)), according to CRYSTEX QC analysis, in the range from 2.00 to 4.00 dl/g;

the second heterophasic propylene copolymer (B) comprises a matrix phase and an elastomer phase dispersed therein and has

- a melt flow rate $MFR_2$, determined according to ISO 1133 at 230 °C and 2.16 kg, in the range from 3.0 to 30 g/10 min and
- an intrinsic viscosity, determined according to DIN ISO 1628/1, of the soluble fraction (iV(SF)), according to CRYSTEX QC analysis, in the range from 4.10 to 10.00 dl/g;

the mixed-plastics polypropylene blend (C) has

- a crystalline fraction (CF) content determined according to CRYSTEX QC analysis in the range from 85.0 to 96.0 wt.-%, preferably in the range from 86.5 to 95.5 wt.-%, and
- a soluble fraction (SF) content determined according to CRYSTEX QC analysis in the range from 4.0 to 15.0 wt.-%, preferably in the range from 4.5 to 13.5 wt.-%,, whereby
- said crystalline fraction (CF) has an ethylene content (C2(CF)), as determined by FT-IR spectroscopy calibrated by quantitative $^{13}$C-NMR spectroscopy, in the range from 1.0 to 10.0 wt.-%, preferably in the range of 1.5 to 9.5 wt.-%; and
- said soluble fraction (SF) has an intrinsic viscosity (iV(SF)) in the range from 0.9 to 2.1 dl/g, preferably in the range of 1.0 to 2.0 dl/g, more preferably in the range of 1.1 to 1.9 dl/g;

the ethylene based plastomer (D) being a copolymer of ethylene with comonomer units selected from alpha-olefins having from 3 to 12 carbon atoms, preferably from alpha-olefins having from 4 to 10 carbon atoms, most preferably from 1-octene, has

- a melt flow rate $MFR_2$ of 0.2 to 2.5 g/10min, preferably 0.3 to 2.0 g/10min, determined according to ISO 1133 at 190 °C and 2.16 kg; and
- a density of 850 to 870 kg/m³, preferably from 855 to 865 kg/m³, determined according to ISO 1183; and

the composition has a melt flow rate $MFR_2$, determined according to ISO 1133 at 230 °C and 2.16 kg, in the range from 5.0 to less than 20.0 g/10 min, preferably from 7.5 to 19.0 g/10 min, more preferably from 9.0 to 17.5 g/10 min.

The composition suitable for automotive application according to the present invention is particularly suitable for injection moulding of articles to be used on the interior of vehicles.

The composition suitable for automotive application according to the present invention has one or more of the following characteristics:
The composition has a melt flow rate $MFR_2$ (230°C, 2.16 kg, ISO 1133) of from 5.0 to less than 20.0 g/10 min, preferably from 7.5 to 19.0 g/10 min, more preferably from 9.0 to 17.5 g/10 min.

The composition can be characterized by CRYSTEX QC analysis. In the CRYSTEX QC analysis a crystalline fraction (CF) and a soluble fraction (SF) are obtained which can be quantified and analysed in regard of the monomer and comonomer content as well as the intrinsic viscosity (iV).

The composition preferably shows one or all of the following properties in the CRYSTEX QC analysis:

- a crystalline fraction (CF) content determined according to CRYSTEX QC analysis in the range from 65.0 to 85.0 wt.-%, preferably 70.0 to 80.0 wt.-%, and
- a soluble fraction (SF) content determined according to CRYSTEX QC analysis in the range from 15.0 to 35.0 wt.-%, preferably 20.0 to 30.0 wt.-%.

Generally, the crystalline fraction (CF) content and the soluble (SF) content of a composition only relate to its polymeric components, i.e. without other components, which are insoluble and therefore not part of the dissolution and crystallization cycles as described below in the determination method, such as the inorganic filler (E).

The crystalline fraction (CF) content and the soluble (SF) content therefore are based on the weight amount of the polymeric components of the composition.

Said crystalline fraction (CF) preferably has one or more, preferably all of the following properties:

- an ethylene content (C2(CF)), as determined by FT-IR spectroscopy calibrated by quantitative $^{13}$C-NMR spectroscopy, of 1.0 to 10.0 wt.-%, preferably 2.5 to 7.5 wt.-%; and/or
- an intrinsic viscosity (iV(CF)), as measured in decalin according to DIN ISO 1628/1 at 135°C, of less than 2.0 dl/g, preferably from 1.2 to 1.9 dl/g.

Said soluble fraction (SF) preferably has one or more, preferably all of the following properties:

- an ethylene content (C2(SF)), as determined by FT-IR spectroscopy calibrated by quantitative $^{13}$C-NMR spectroscopy, in the range from 30 to 50 wt.-%, preferably 35 to 48 wt.-%; and/or
- an intrinsic viscosity (iV(SF)), as measured in decalin according to DIN ISO 1628/1 at 135°C, of more than 2.1 dl/g, preferably from 2.2 to 3.7 dl/g.

The composition preferably has a ratio of the intrinsic viscosities of the soluble fraction and crystalline fraction (iV(SF)/iV(CF)) of more than 1.0, more preferably of 1.40 to 2.20, still more preferably from 1.55 to 2.00.

Still further, the composition preferably has a ratio of the ethylene contents of the soluble fraction and crystalline fraction (C2(SF)/C2(CF)) of 2.5 to 15.0, more preferably in the range of from 3.5 to 14.0, still more preferably in the range of from 5.0 to 12.5.

The composition according to the invention preferably shows a superior balance of properties in regard of flowability, as can be seen from the melt flow rate described above, impact properties, stiffness, such as in in regard of the tensile properties and especially emissions, such as in regard of LBS and HBS volatiles and fogging.

The composition preferably has a tensile modulus of from 1200 MPa to 2200 MPa, preferably from 1300 MPa to 2000 MPa.

Further, the composition preferably has a Charpy Notched Impact Strength at 23 °C (CNIS at 23°C) of from 7.5 kJ/m$^2$ to 55.0 kJ/m$^2$, more preferably from 8.5 to 50.0 kJ/m$^2$.

Further, the composition preferably has a Charpy Notched Impact Strength at -20 °C (CNIS at -20°C) of from 2.5 kJ/m$^2$ to 10.0 kJ/m$^2$, more preferably from 3.5 to 7.5 kJ/m$^2$.

Additionally, the composition preferably has a stiffness-impact coefficient Tensile Modulus * Charpy NIS (+23 °C) of from 10000 to 100000 MPa*kJ/m$^2$, more preferably from 1500 to 80000 MPa*kJ/m$^2$, still more preferably from 15000 to 70000 MPa*kJ/m$^2$.

Further, the composition preferably has a content of low boiling organic substances (LBS), determined by screening of organic emissions by thermo-desorption analysis, in the range from 5 to 100 μg/g, more preferably from 10 to 75 μg/g.

Still further, the composition preferably has a content of high boiling organic substances (HBS), determined by screening of organic emissions by thermo-desorption analysis, in the range from 100 to 500 μg/g, more preferably from 200 to 450 μg/g.

Furthermore, the composition preferably has an amount of fogging, determined according to the gravimetric method DI 75201:2011-11, method B, in the range from 0.05 to 1.00 mg, more preferably from 0.15 to 0.75 mg.

The composition of the invention mandatorily comprises components (A), (B), (C), (D) and (E) as described above or below in the accordantly described amounts.

Components (A), (B), (C), (D) and (E) preferably make up from 85.0 to 100 wt.-%, more preferably from 90.0 to 99.9 wt.-%

The composition preferably further comprises a pigment masterbatch in an amount of from 0.5 to 10.0 wt.-%, more preferably in the range from 2.0 to 10.0 wt.-%, most preferably in the range from 4.0 to 10.0 wt.-%, based on the total weight of the composition.

The composition preferably further comprises additives in an amount of up to 3.0 wt%, more preferably in an amount of from 0.1 to 3.0 wt%, still more preferably in an amount of from 0.5 to 2.5 wt%, based on the total weight of the composition.

Typically additives would be selected from antioxidants, anti-slip agents, nucleating agents, anti-scratch agents, anti-scorch agents, metal deactivators, UV-stabilisers, acid scavengers, lubricants, anti-static agents and the like, as well as combinations thereof. These additives are well known in the polymer industry and their use will be familiar to the skilled practitioner. Any additives, which are present, may be added as an isolated raw material or in a mixture with a carrier polymer, i.e. in a so-called master batch.

The composition according to the invention is usually prepared by melt blending the components (A), (B), (C), (D) and (E), optional pigment masterbatch and optional additives. Melt blending equipment and conditions are within the common skills in the art.

In particular, it is preferred to use a conventional compounding or blending apparatus, e.g. a Banbury mixer, a 2-roll rubber mill, Buss-co-kneader or a twin-screw extruder. More preferably, mixing is accomplished in a co-rotating twin-screw extruder.

The polymer materials, such as the composition according to the invention, recovered from the extruder are usually in the form of pellets.

First heterophasic propylene copolymer (A)

The first heterophasic propylene copolymer (A) comprises a matrix phase and an elastomer phase dispersed therein.

The first heterophasic propylene copolymer (A) has a melt flow rate $MFR_2$ (230°C, 2.16 kg, ISO 1133) of 90 to 250 g/10 min, preferably 95 to 200 g/10min, more preferably 97 to 175 g/10min.

The first heterophasic propylene copolymer (A) can be characterized by the CRYSTEX QC analysis. In the CRYSTEX QC analysis a crystalline fraction (CF) and a soluble fraction (SF) are obtained which can be quantified and analysed in regard of the monomer and comonomer content as well as the intrinsic viscosity (iV).

The first heterophasic propylene copolymer (A) preferably shows one or all of the following properties in the CRYSTEX QC analysis:

- a crystalline fraction (CF) content determined according to CRYSTEX QC analysis in the range from 80.5 to 92.0 wt.-%, preferably from 82.0 to 90.0 wt.-%, more preferably from 83.0 to 86.0 wt.-%; and
- a soluble fraction (SF) content determined according to CRYSTEX QC analysis in the range from 8.0 to 19.5 wt.-%, preferably in the range from 10.0 to 18.0 wt.-%, more preferably in the range from 13.0 to 17.0 wt.-%.

Said crystalline fraction (CF) preferably has one or more, preferably all of the following properties:

- an ethylene content (C2(CF)), as determined by FT-IR spectroscopy calibrated by quantitative $^{13}$C-NMR spectroscopy, of 0.1 to 5.0 wt.-%, preferably of 0.2 to 4.0 wt.%, more preferably of 0.5 to 3.0 wt%; and/or
- an intrinsic viscosity (iV(CF)), as measured in decalin according to DIN ISO 1628/1 at 135°C, of less than 1.8 dl/g, preferably of 0.8 to 1.6 dl/g, more preferably of 0.9 to 1.3 dl/g.

Said soluble fraction (SF) preferably has one or more, preferably all of the following properties:

- an ethylene content (C2(SF)), as determined by FT-IR spectroscopy calibrated by quantitative $^{13}$C-NMR spectroscopy, in the range from 25.0 to 45.0 wt.-%, preferably from 27.5 to 43.0 wt.-%, more preferably from 30.0 to 42.0 wt.-%; and/or
- an intrinsic viscosity (iV(SF)), as measured in decalin according to DIN ISO 1628/1 at 135°C, of 1.50 to 4.00 dl/g, preferably of 1.60 to 3.00 dl/g, more preferably of 1.70 to 2.50 dl/g;.

The first heterophasic propylene copolymer (A) preferably comprises units derived from ethylene in an amount of from 2.5 to 12.5 wt.-%, more preferably from 4.0 to 10.0 wt.-%, still more preferably from 5.0 to 7.5 wt.-%.

The ratio of the intrinsic viscosities of the soluble fraction and crystalline fraction (IV(SF)/IV(CF)) is preferably more than 1.0, more preferably of 1.3 to 2.5, still more preferably of 1.4 to 2.0.

The ratio of the ethylene contents of the soluble fraction and crystalline fraction (C2(SF)/C2(CF)) is preferably in the range of from 7.5 to 22.5, more preferably in the range of from 10.0 to 20.0, still more preferably in the range of from 15.0 to 17.5.

The first heterophasic propylene copolymer (A) further preferably has one or more, preferably all, of the following properties:

- a melting temperature Tm of from 155 to 175°C, more preferably from 157 to 172°C, still more preferably from 160 to 170°C; and/or
- a crystallization temperature Tc of from 115 to 135°C, more preferably from 117 to 132°C, still more preferably from 119 to 130°C,

all of said temperatures being determined by differential scanning calorimetry (DSC).

The first heterophasic propylene copolymer (A) preferably shows a good balance of properties in regard of mechanical properties, impact properties and heat stability:

The first heterophasic propylene copolymer (A) preferably has a tensile modulus of from 1200 to 1600 MPa, more preferably from 1250 to 1550 MPa, still more preferably from 1300 to 1500 MPa.

Further the first heterophasic propylene copolymer (A) preferably has a Charpy Notched Impact Strength at 23°C (CNIS at 23°C) of from 1.0 to 7.5 kJ/m$^2$, more preferably from 2.0 to 5.0 kJ/m$^2$.

It is preferred that the first heterophasic propylene copolymer (A) consists of propylene units and ethylene units only.

Although not measured, the content of units derived from propylene (C3) in the soluble fraction (SF) preferably adds up to 100 wt.-% with the content of units derived from ethylene (C2) in the soluble fraction (SF).

The content of units derived from propylene (C3) in the soluble fraction (SF) is preferably 55.0 to 75.0 wt.-%, more preferably 57.0 to 72.5 wt.-%, still more preferably 58.0 to 70.0 wt.- %.

Although not measured the content of units derived from propylene (C3) in the crystalline fraction (CF) preferably adds up to 100 wt.-% with the content of units derived from ethylene (C2) in the crystalline fraction (CF).

The content of units derived from propylene (C3) in the crystalline fraction (CF) is preferably 95.0 to 99.9 wt.-%, more preferably 96.0 to 99.8 wt.-%, still more preferably 97.0 to 99.5 wt.- %.

The total content of units derived from propylene (C3) in the first heterophasic polypropylene copolymer (A) is preferably 87.5 to 97.5 wt.-%, more preferably 90.0 to 96.0 wt.-%, still more preferably 92.5 to 95.0 wt.-%.

The first heterophasic propylene copolymer (A) preferably is a virgin polymer.

Heterophasic propylene copolymers suitable as first heterophasic propylene copolymer (A) are commercially available.

Before blending with the other components for preparing the composition according to the invention the first heterophasic propylene copolymer (A) can be aerated, e.g. as described in EP 3 786 190 A1, for removing volatile components.

Second heterophasic propylene copolymer (B)

The second heterophasic propylene copolymer (B) comprises a matrix phase and an elastomer phase dispersed therein.

The second heterophasic propylene copolymer (B) has a melt flow rate MFR$_2$ (230°C, 2.16 kg, ISO 1133) of 3.0 to 30 g/10 min, preferably 4.0 to 20.0 g/10min, more preferably 4.5 to 10.0 g/10min.

The second heterophasic propylene copolymer (B) can be characterized by the CRYSTEX QC analysis. In the CRYSTEX QC analysis a crystalline fraction (CF) and a soluble fraction (SF) are obtained which can be quantified and analysed in regard of the monomer and comonomer content as well as the intrinsic viscosity (iV).

The second heterophasic propylene copolymer (B) preferably shows one or all of the following properties in the CRYSTEX QC analysis:

- a crystalline fraction (CF) content determined according to CRYSTEX QC analysis in the range from 65.0 to 85.0 wt.-%, preferably from 70.0 to 82.5 wt.-%, more preferably from 74.0 to 80.0 wt.-%; and
- a soluble fraction (SF) content determined according to CRYSTEX QC analysis in the range from 15.0 to 35.0 wt.-%, preferably in the range from 17.5 to 30.0 wt.-%, more preferably in the range from 20.0 to 26.0 wt.-%.

Said crystalline fraction (CF) preferably has one or more, preferably all of the following properties:

- an ethylene content (C2(CF)), as determined by FT-IR spectroscopy calibrated by quantitative $^{13}$C-NMR spectroscopy, of 0.1 to 5.0 wt.-%, preferably of 0.2 to 4.0 wt.%, more preferably of 0.5 to 3.0 wt%; and/or
- an intrinsic viscosity (iV(CF)), as measured in decalin according to DIN ISO 1628/1 at 135°C, of less than 2.5 dl/g, preferably of 1.2 to 2.4 dl/g, more preferably of 1.6 to 2.2 dl/g.

Said soluble fraction (SF) preferably has one or more, preferably all of the following properties:

- an ethylene content (C2(SF)), as determined by FT-IR spectroscopy calibrated by quantitative $^{13}$C-NMR spectroscopy, in the range from 18.0 to 30.0 wt.-%, preferably from 19.0 to 28.0 wt.-%, more preferably from 20.0 to 26.0 wt.-%; and/or
- an intrinsic viscosity (iV(SF)), as measured in decalin according to DIN ISO 1628/1 at 135°C, of 4.10 to 10.00 dl/g, preferably of 4.50 to 8.00 dl/g, more preferably of 5.00 to 6.00 dl/g.

The second heterophasic propylene copolymer (B) preferably comprises units derived from ethylene in an amount of from 2.5 to 12.5 wt.-%, more preferably from 4.0 to 10.0 wt.-%, still more preferably from 5.0 to 7.5 wt.-%.

The ratio of the intrinsic viscosities of the soluble fraction and crystalline fraction (IV(SF)/IV(CF)) is preferably more than 2.0, more preferably of 2.2 to 3.5, still more preferably of 2.5 to 3.2.

The ratio of the ethylene contents of the soluble fraction and crystalline fraction (C2(SF)/C2(CF)) is preferably in the range of from 5.0 to 17.5, more preferably in the range of from 7.5 to 15.0, still more preferably in the range of from 10.0 to 12.5.

The second heterophasic propylene copolymer (B) further preferably has one or more, preferably all, of the following properties:

- a melting temperature Tm of from 155 to 175°C, more preferably from 157 to 172°C, still more preferably from 160 to 170°C; and/or

- a crystallization temperature Tc of from 110 to 130°C, more preferably from 112 to 127°C, still more preferably from 114 to 124°C,

all of said temperatures being determined by differential scanning calorimetry (DSC).

The second heterophasic propylene copolymer (B) preferably shows a good balance of properties in regard of mechanical properties, impact properties and heat stability:
The second heterophasic propylene copolymer (B) preferably has a tensile modulus of from 850 to 1300 MPa, more preferably from 900 to 1200 MPa, still more preferably from 1000 to 1150 MPa.

Further the second heterophasic propylene copolymer (B) preferably has a Charpy Notched Impact Strength at 23°C (CNIS at 23°C) of from 30 to 75 kJ/m$^2$, more preferably from 40 to 60 kJ/m$^2$.

It is preferred that the second heterophasic propylene copolymer (B) consists of propylene units and ethylene units only.

Although not measured, the content of units derived from propylene (C3) in the soluble fraction (SF) preferably adds up to 100 wt.-% with the content of units derived from ethylene (C2) in the soluble fraction (SF).

The content of units derived from propylene (C3) in the soluble fraction (SF) is preferably 70.0 to 82.0 wt.-%, more preferably 72.0 to 81.0 wt.-%, still more preferably 74.0 to 80.0 wt.- %.

Although not measured the content of units derived from propylene (C3) in the crystalline fraction (CF) preferably adds up to 100 wt.-% with the content of units derived from ethylene (C2) in the crystalline fraction (CF).

The content of units derived from propylene (C3) in the crystalline fraction (CF) is preferably 95.0 to 99.9 wt.-%, more preferably 96.0 to 99.8 wt.-%, still more preferably 97.0 to 99.5 wt.- %.

The total content of units derived from propylene (C3) in the second heterophasic propylene copolymer (B) is preferably 87.5 to 97.5 wt.-%, more preferably 90.0 to 96.0 wt.-%, still more preferably 92.5 to 95.0 wt.-%.

The second heterophasic propylene copolymer (B) preferably is a virgin polymer.

Heterophasic propylene copolymers suitable as second heterophasic propylene copolymer (B) are commercially available.

Before blending with the other components for preparing the composition according to the invention the second heterophasic propylene copolymer (B) can be aerated, e.g. as described in EP 3 786 190 A1, for removing volatile components.

Mixed-Plastics Polypropylene Blend (C)

The mixed-plastics polypropylene blend (C) is a polypropylene rich recycled material, meaning that it comprises significantly more polypropylene than polyethylene. Recycled waste streams, which are high in polypropylene can be obtained for example from the automobile industry, particularly as some automobile parts such as bumpers are sources of fairly pure polypropylene material in a recycling stream.

Preferably, the polypropylene rich recycled material is obtained from recycled waste by means of plastic recycling processes known in the art. Such recyclates are commercially available, e.g. from Corepla (Italian Consortium for the collection, recovery, recycling of packaging plastic wastes), Resource Plastics Corp. (Brampton, ON), Kruschitz GmbH, Plastics and Recycling (AT), Vogt Plastik GmbH (DE), Mtm Plastics GmbH (DE) etc. Non-exhaustive examples of polypropylene rich recycled materials include: Dipolen®PP (Mtm Plastics GmbH), Axpoly® recycled polypropylene pellets (Axion Ltd) and PolyPropylene Copolymer (BSP Compounds).

During recycling, any reasonable measure will usually be taken for any components other than polyethylene and polypropylene to be reduced/removed as far as the final application or use suggests such measures; however, other components are often present in small amounts.

Other such components include polystyrene (PS), polyamides (PA), polyethylene terephthalate (PET), which are all present in as low an amount as possible, preferably below the detection limit.

The mixed-plastics polypropylene blend (C) preferably has a melt flow MFR$_2$, determined according to ISO 1133 at 230 °C and 2.16 kg, in the range from 10.0 to 40.0 g/10 min, more preferably in the range from 12.0 to 35.0 g/10 min, most preferably in the range from 13.0 to 30.0 g/10 min.

The mixed-plastics polypropylene blend (C) can be characterized by the CRYSTEX QC analysis. In the CRYSTEX QC analysis a crystalline fraction (CF) and a soluble fraction (SF) are obtained which can be quantified and analysed in regard of the monomer and comonomer content as well as the intrinsic viscosity (iV).

The mixed-plastics polypropylene blend (C) preferably shows one or all of the following properties in the CRYSTEX QC analysis:

- a crystalline fraction (CF) content determined according to CRYSTEX QC analysis in the range from 85.0 to 96.0 wt.-%, preferably from 86.5 to 95.5 wt.-%, more preferably from 89.0 to 95.0 wt.-%; and
- a soluble fraction (SF) content determined according to CRYSTEX QC analysis in the range from 4.0 to 15.0 wt.-%, preferably from 4.5 to 13.5 wt.-%, more preferably from 5.0 to 11.0 wt.-%.

Said crystalline fraction (CF) preferably has one or more, preferably all of the following properties:

- an ethylene content (C2(CF)), as determined by FT-IR spectroscopy calibrated by quantitative $^{13}$C-NMR spectroscopy, of 1.0 to 10.0 wt.-%, preferably in the range of 1.5 to 9.5 wt.-%, more preferably of 2.0 to 7.5 wt%; and/or
- an intrinsic viscosity (iV(CF)), as measured in decalin according to DIN ISO 1628/1 at 135°C, of less than 2.5 dl/g, preferably of 1.1 to 2.3 dl/g, more preferably of 1.4 to 2.0 dl/g.

Said soluble fraction (SF) preferably has one or more, preferably all of the following properties:

- an ethylene content (C2(SF)), as determined by FT-IR spectroscopy calibrated by quantitative $^{13}$C-NMR spectroscopy, in the range from 20.0 to 55.0 wt.-%, preferably from 22.0 to 50.0 wt.-%, more preferably from 24.0 to 48.0 wt.-%; and/or
- an intrinsic viscosity (iV(SF)), as measured in decalin according to DIN ISO 1628/1 at 135°C, of 0.9 to 2.1 dl/g, preferably in the range of 1.0 to 2.0 dl/g, more preferably in the range of 1.1 to 1.9 dl/g.

The mixed-plastics polypropylene blend (C) preferably comprises units derived from ethylene in an amount of from 2.5 to 10.0 wt.-%, more preferably from 3.0 to 9.0 wt.-%, still more preferably from 3.5 to 8.0 wt.-%.

The mixed-plastics polypropylene blend (C) preferably has an inorganic residue content, as determined by calcination analysis according to DIN ISO 1172:1996, of 0.05 to 3.0 wt.-%, more preferably in the range from 0.5 to 2.5 wt.-%, most preferably in the range from 1.0 to 2.5 wt.-%

The mixed-plastics polypropylene blend (C) preferably originates from post-industrial waste or post-consumer waste, most preferably from post-consumer waste.

The mixed-plastics polypropylene blend (C) preferably has a limonene content, determined by solid phase microextraction (HS-SPME-GC-MS), in the range from 1 to 250 mg/m$^3$.

The presence of limonene is indicative that the mixed-plastics polypropylene blend (C) originates from post-consumer waste.

Further indications of the recycled-nature of the mixed-plastics polypropylene blend (C) include the presence of other polymers, such as polystyrene and polyamide-6, and the presence of fatty acids.

Accordingly, it is further preferred that the mixed-plastics polypropylene blend (C) comprises one or more of polystyrene, polyamide-6 and fatty acids, preferably comprises each of polystyrene, polyamide-6 and fatty acids.

The mixed-plastics polypropylene blend (C) preferably has a CIELAB colour space (L*a*b) of

i) L* of from 50.0 to 97.0, more preferably from 80.0 to 97.0;
ii) a* of from -5.0 to 0.0;
iii) b* of from 0.0 up to, but not including, 22.0.

For producing polypropylene compositions having a light colour, e.g. light grey, it is especially preferred that the L* value is in the range from 80.0 to 97.0.

Before blending with the other components for preparing the composition according to the invention the mixed-plastics polypropylene blend (C) can be aerated, e.g. as described in EP 3 786 190 A1, for removing volatile components.

Ethylene-Based Plastomer (D)

The ethylene-based plastomer (D) is preferably copolymer of ethylene with comonomer units selected from alpha-olefins having from 3 to 12 carbon atoms, preferably from alpha-olefins having from 4 to 10 carbon atoms, more preferably from 1-butene or 1-octene, most preferably from 1-octene.

Ethylene-based plastomers are usually added for further improving the impact properties of the composition.

The ethylene-based plastomer (D) preferably has one or more, preferably all, of the following properties:

- a melt flow rate $MFR_2$ (190°C, 2.16 kg, ISO 1133) of 0.2 to 2.5 g/10min, preferably 0.3 to 2.0 g/10min; and
- a density of 850 to 870 $kg/m^3$, preferably from 855 to 865 $kg/m^3$.

Such ethylene-based plastomer are commercially available under the tradename Engage, Exact, Queo, Tafmer or others.

Inorganic Filler (E)

It is preferred that the inorganic filler (E) is selected from the group containing talc, calcium carbonate, barium sulfate, mica, and mixtures thereof.

Most preferably, the inorganic filler (E) is talc.

The inorganic filler, preferably talc, (E) preferably has a median particle size $d_{50}$ before compounding of 0.3 to 30.0 micrometers, more preferably 0.5 to 15.0 micrometers.

Further, the inorganic filler, preferably talc, (D) preferably has a top-cut particle size $d_{95}$ before compounding of 1.0 to 50.0 micrometers, preferably 1.5 to 35.0 micrometers.

The particle size is usually measured by Sedigraph measurement and is given in the technical data sheets of commercial grades.

Such inorganic fillers are commercially available.

Pigment masterbatch

The composition of the invention is preferably a pigmented composition.

As such, a pigment masterbatch is provided in an amount in the range from 0.5 to 10.0 wt.-%, more preferably in the range from 2.0 to 10.0 wt.-%, most preferably in the range from 4.0 to 10.0 wt.-%, based on the total weight of the composition.

The pigment masterbatch preferably has a total pigment content in the range from 40.0 to 80.0 wt.-%, based on the total weight of the pigment masterbatch. The pigment masterbatch may comprise one pigment, or it may comprise multiple pigments. When the pigment masterbatch comprises more than one pigment, the pigment masterbatch may be provided as multiple pigment masterbatches, each containing a single pigment, wherein the sum of the amounts of the individual pigment masterbatches equals the total weight of the pigment masterbatch according to the present invention.

The selection of the pigment depends on the intended colour of the composition. Beyond such considerations, the choice of suitable pigment is not restricted. The person skilled in the art would be able to select suitable pigment(s) to achieve a certain end colour of the composition.

Additives

The further additives are preferably provided in an amount in the range from 0.1 to 3.0 wt.-%, preferably in an amount of from 0.1 to 3.0 wt%, still more preferably in an amount of from 0.5 to 2.5 wt%, based on the total weight of the composition. The skilled practitioner would be able to select suitable additives that are well known in the art.

The additives are preferably selected from antioxidants, UV-stabilisers, anti-scratch agents, mould release agents, acid scavengers, lubricants, anti-static agents, and mixtures thereof.

It is understood that the content of additives, given with respect to the total weight of the composition, includes any carrier polymers used to introduce the additives to said composition, i.e. masterbatch carrier polymers. An example of such a carrier polymer would be a polypropylene homopolymer in the form of powder.

Article

In another aspect, the present invention relates to an article comprising the composition as described above or below in an amount of from 90 to 100 wt.-%, preferably from 95 to 100 wt.-%, more preferably from 98 to 100 wt.-%, still more preferably from 99 to 100 wt.-%.

The article preferably is a moulded article, more preferably a moulded automotive article.

The article is preferably used on the interior of vehicles, such as dashboards, step assists, interior trims, ash trays, interior body panels and gear shift levers.

The articles prepared from the composition according to the invention show good surface quality, such as in regard of tiger stripes measured as MSE surface quality, in addition to the above described superior balance of properties of the composition.

It is preferred that the article has a MSE surface quality at 1.5 s of below 25, more preferably below 23.

Further the article preferably has a MSE surface quality at 3 s of below 15, more preferably below 13

Still further, the article preferably has a MSE surface quality at 6 s of below 15, preferably below 13.

Additionally, the article preferably has a MSE surface quality at 1.5 s meeting the following dimensionless in-equation (I):

$$MSE, 1.5 \text{ s} < 0.00015 \cdot TM \cdot Charpy \text{ } NIS, 23°C + 20$$

wherein MSE, 1.5 s = MSE surface quality at 1.5 s,
TM = tensile modulus, determined according to ISO 527-2, in [MPa$^{-1}$] and
Charpy NIS, 23°C = Charpy notched impact strength, determined according to ISO 179 1eA at +23°C, in [m$^2$/kJ].

Further, the article preferably has a MSE surface quality at 3 s meeting the following dimensionless in-equation (II):

$$MSE, 3 \text{ s} < -0{,}5 \cdot filler + 15$$

wherein

MSE, 3 s = MSE surface quality at 3 s, and
filler = the inorganic filler (E) content in [1/wt.-%].

Additionally, the article preferably has a scratch resistance at 10 N in the range from 0.00 to 1.00, more preferably from 0.10 to 0.90.

<u>Use</u>

In yet another aspect the present invention relates to the use of the composition as described above or below for injection moulding of articles, preferably automotive articles, more preferably automotive interior articles.

**Experimental Section**

The following Examples are included to demonstrate certain aspects and embodiments of the invention as described in the claims. It should be appreciated by those of skill in the art, however, that the following description is illustrative only and should not be taken in any way as a restriction of the invention.

**Test Methods**

**a) CRYSTEX**

**Determination of Crystalline and soluble fractions and their respective properties (IV and Ethylene content)**

The crystalline (CF) and soluble fractions (SF) of the polypropylene (PP) compositions as well as the comonomer content and intrinsic viscosities of the respective fractions were analysed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596)

The crystalline and amorphous fractions are separated through temperature cycles of dissolution at 160°C, crystallization at 40°C and re-dissolution in 1,2,4-trichlorobenzene at 160°C. Quantification of SF and CF and determination of ethylene content (C2) are achieved by means of an integrated infrared detector (IR4) and for the determination of the intrinsic viscosity (iV) an online 2-capillary viscometer is used.

The IR4 detector is a multiple wavelength detector measuring IR absorbance at two different bands (CH$_3$ stretching vibration (centred at app. 2960 cm$^{-1}$) and the CH stretching vibration

(2700-3000 cm$^{-1}$) that are serving for the determination of the concentration and the Ethylene content in Ethylene-Propylene copolymers. The IR4 detector is calibrated with series of 8 EP copolymers with known Ethylene content in the range of 2 wt.-% to 69 wt.-% (determined by $^{13}$C-NMR) and each at various concentrations, in the range of 2 and 13mg/ml. To encounter for both features, concentration and ethylene content at the same time for various polymer concentrations expected during Crystex analyses the following calibration equations were applied:

$$\text{Conc} = a + b*\text{Abs(CH)} + c*(\text{Abs(CH)})^2 + d*\text{Abs}(CH_3) + e*(\text{Abs}(CH_3)^2 + f*\text{Abs(CH)}*\text{Abs}(CH_3) \qquad \text{(Equation 1)}$$

$$CH_3/1000C = a + b*\text{Abs(CH)} + c*\text{Abs}(CH_3) + d*(\text{Abs}(CH_3)/\text{Abs(CH)}) + e*(\text{Abs}(CH_3)/\text{Abs(CH)})^2 \qquad \text{(Equation 2)}$$

The constants a to e for equation 1 and a to f for equation 2 were determined by using least square regression analysis.

The $CH_3/1000C$ is converted to the ethylene content in wt.-% using following relationship:

$$\text{wt.-\% (Ethylene in EP Copolymers)} = 100 - CH_3/1000TC * 0.3 \qquad \text{(Equation 3)}$$

Amounts of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%. The determined XS calibration is linear:

$$\text{wt.-\% XS} = 1{,}01 * \text{wt\% SF} \qquad \text{(Equation 4)}$$

Intrinsic viscosity (iV) of the parent EP copolymer and its soluble and crystalline fractions are determined with a use of an online 2-capillary viscometer and are correlated to corresponding iV's determined by standard method in decalin according to ISO 1628-3. Calibration is achieved with various EP PP copolymers with iV = 2-4 dL/g. The determined calibration curve is linear:

$$iV \text{ (dL/g)} = a * Vsp/c \text{ (equation 5)}$$

The samples to be analysed are weighed out in concentrations of 10mg/ml to 20mg/ml. To avoid injecting possible gels and/or polymers which do not dissolve in TCB at 160°C, like PET and PA, the weighed out sample was packed into a stainless steel mesh MW 0,077/D 0,05mmm.

After automated filling of the vial with 1,2,4-TCB containing 250 mg/l 2,6-tert-butyl-4-methylphenol (BHT) as antioxidant, the sample is dissolved at 160°C until complete dissolution is achieved, usually for 60 min, with constant stirring of 400rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the iV [dl/g] and the C2 [wt.- %] of the PP composition. During the second injection the soluble fraction (at low temperature) and the crystalline fraction (at high temperature) with the crystallization cycle are measured (wt.-% SF, wt.-% C2, iV).

**b) Xylene cold soluble fraction (XCS, wt%)**
Xylene cold soluble fraction (XCS) was determined at 25 °C according ISO 16152; first edition; 2005-07-01. The part which remains insoluble is the xylene cold insoluble (XCI) fraction.

**c) Intrinsic viscosity**
Intrinsic viscosity was measured according to DIN ISO 1628/1, October 1999 (in Decalin at 135 °C).

**d) Charpy Notched Impact Strength**
was determined according to ISO 179-1 eA at +23 °C and at -20 °C on injection moulded specimens of $80 \times 10 \times 4$ mm$^3$ prepared according to EN ISO 1873-2. The measurement was done after 96 h conditioning time at 23 °C of the specimen.

**e) Tensile modulus**

was measured according to ISO 527-2 (cross head speed = 1 mm/min; test speed 50 mm/min at 23 °C) using injection moulded specimens 1B prepared as described in EN ISO 1873-2 (dog bone shape, 4 mm thickness). The measurement was done after 96 h conditioning time at 23 °C of the specimen.

**f) Comonomer content**

**Poly(propylene-co-ethylene) - ethylene content - IR spectroscopy**

Quantitative infrared (IR) spectroscopy was used to quantify the ethylene content of the poly(ethylene-co-propene) copolymers through calibration to a primary method. Calibration was facilitated through the use of a set of in-house non-commercial calibration standards of known ethylene contents determined by quantitative $^{13}C$ solution-state nuclear magnetic resonance (NMR) spectroscopy. The calibration procedure was undertaken in the conventional manner well documented in the literature. The calibration set consisted of 38 calibration standards with ethylene contents ranging 0.2-75.0 wt.% produced at either pilot or full scale under a variety of conditions. The calibration set was selected to reflect the typical variety of copolymers encountered by the final quantitative IR spectroscopy method. Quantitative IR spectra were recorded in the solid-state using a Bruker Vertex 70 FTIR spectrometer. Spectra were recorded on 25x25 mm square films of 300 $\mu$m thickness prepared by compression moulding at 180 - 210°C and 4 - 6 MPa. For samples with very high ethylene contents (>50 mol%) 100 $\mu$m thick films were used. Standard transmission FTIR spectroscopy was employed using a spectral range of 5000-500 cm$^{-1}$, an aperture of 6 mm, a spectral resolution of 2 cm$^{-1}$, 16 background scans, 16 spectrum scans, an interferogram zero filling factor of 64 and Blackmann-Harris 3-term apodisation. Quantitative analysis was undertaken using the total area of the $CH_2$ rocking deformations at 730 and 720 cm$^{-1}$ ($A_Q$) corresponding to $(CH_2)_{>2}$ structural units (integration method G, limits 762 and 694 cm$^{-1}$). The quantitative band was normalised to the area of the CH band at 4323 cm$^{-1}$ ($A_R$) corresponding to CH structural units (integration method G, limits 4650, 4007 cm$^{-1}$). The ethylene content in units of weight percent was then predicted from the normalised absorption ($A_Q / A_R$) using a quadratic calibration curve. The calibration curve having previously been constructed by ordinary least squares (OLS) regression of the normalised absorptions and primary comonomer contents measured on the calibration set.

**Poly(propylene-co-ethylene) - ethylene content - $^{13}C$ NMR spectroscopy**

Quantitative $^{13}C\{^1H\}$ NMR spectra were recorded in the solution-state using a Bruker Avance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of 1,2-tetrachloroethane-d$_2$ (TCE-d$_2$) along with chromium (III) acetylacetonate (Cr(acac)$_3$) resulting in a 65 mM solution of relaxation agent in solvent (Singh, G., Kothari, A., Gupta, V., Polymer Testing 28 5 (2009), 475).

To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., et al. J. Mag. Reson. 187 (2007) 225, and in Busico, V., et al, Macromol. Rapid Commun. 2007, 28, 1128). A total of 6144 (6k) transients were acquired per spectra. Quantitative $^{13}C\{^1H\}$ NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed (Cheng, H. N., Macromolecules 17 (1984), 1950) and the comonomer fraction calculated as the fraction of ethylene in the polymer with respect to all monomer in the polymer: fE = ( E / ( P + E ) The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents. For systems with very low ethylene content where only isolated ethylene in PPEPP sequences were observed the method of Wang et. al. was modified reducing the influence of integration of sites that are no longer present. This approach reduced the overestimation of ethylene content for such systems and was achieved by reduction of the number of sites used to determine the absolute ethylene content to E = 0.5( S$\beta\beta$ + S$\beta\gamma$ + S$\beta\delta$ + 0.5( S$\alpha\beta$ + S$\alpha\gamma$)) Through the use of this set of sites the corresponding integral equation becomes E = 0.5( I$_H$ +I$_G$ + 0.5( I$_C$ + I$_D$ )) using the same notation used in the article of Wang et. al. (Wang, W-J., Zhu, S., Macromolecules 33 (2000), 1157). Equations used for absolute propylene content were not modified. The mole percent comonomer incorporation was calculated from the mole fraction: E [mol%] = 100 * fE. The weight percent comonomer incorporation was calculated from the mole fraction: E [wt.%] = 100 * ( fE * 28.06 ) / ( (fE * 28.06) + ((1-fE) * 42.08) ).

### g) Comonomer content

Contents were determined using a film thickness method using the intensity of the quantitative band I(q) and the thickness of the pressed film T using the following relationship: [ I(q) / T ]m + c = C where m and c are the coefficients determined from the calibration curve constructed using the comonomer contents obtained from $^{13}$C-NMR spectroscopy. Comonomer content was measured in a known manner based on Fourier transform infrared spectroscopy (FTIR) calibrated with $^{13}$C-NMR, using Nicolet Magna 550 IR spectrometer together with Nicolet Omnic FTIR software. Films having a thickness of about 250 $\mu$m were compression moulded from the samples. Similar films were made from calibration samples having a known content of the comonomer. The comonomer content was determined from the spectrum from the wave number range of from 1430 to 1100 cm$^{-1}$. The absorbance was measured as the height of the peak by selecting the so-called short or long base line or both. The short base line was drawn in about 1410 - 1320 cm$^{-1}$ through the minimum points and the long base line about between 1410 and 1220 cm$^{-1}$. Calibrations needed to be done specifically for each base line type. Also, the comonomer content of the unknown sample was within the range of the comonomer contents of the calibration samples.

### h) MFR

Melt flow rates were measured with a load of 2.16 kg (MFR$_2$) at 230 °C (polypropylene based materials) or at 190 °C (polyethylene based materials). The melt flow rate is that quantity of polymer in grams which the test apparatus standardized to ISO 1133 extrudes within 10 minutes at a temperature of 230 °C (or 190°C) under a load of 2.16 kg.

### i) Density

Density was measured according to ISO 1183-187. Sample preparation was done by compression moulding in accordance with ISO 1872-2:2007.

### j) DSC analysis, melting temperature (T$_m$) and heat of fusion (H$_f$), crystallization temperature (T$_c$) and heat of crystallization (H$_c$)

measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature (T$_c$) and crystallization enthalpy (H$_c$) are determined from the cooling step, while melting temperature (T$_m$) and melting enthalpy (H$_m$) are determined from the second heating step.

### k) Scratch Resistance

To determine the scratch visibility, a Cross Hatch Cutter Model 420P, manufactured by Erichsen, was used. For the tests, plaques of 70×70×4 mm size were cut from a moulded grained plaque of size 140×200×4 mm (grain parameters: average grain size = 1 mm, grain depth = 0.12 mm, conicity = 6°). The period between injection moulding of specimens and scratch-testing was 7 days. For testing, the specimens must be clamped in a suitable apparatus as described above. Scratches were applied at a force of 10 N using a cylindrical metal pen with a ball shaped end (radius = 0.5 mm ± 0.01). A cutting speed of 1000 mm/min was used. A minimum of 20 scratches parallel to each other were brought up at a load of 10 N with a distance of 2 mm. The application of the scratches was repeated perpendicular to each other, so that the result was a scratching screen. The scratching direction should be unidirectional. The scratch visibility is reported as the difference of the luminance, ΔL, of the unscratched and the scratched areas. ΔL values were measured using a spectrophotometer that fulfils the requirements to DIN 5033. A detailed test description of the test method (Erichsen cross hatch cutter method) can be found in the article "Evaluation of scratch resistance in multiphase PP blends" by Thomas Koch and Doris Machl, published in Polymer Testing, 26 (2007), p. 927-936.

### 1) Tiger stripes (MSE)

The tendency to show flow marks was examined with a method as described below. This method is described in detail in WO 2010/149529 A1, which is incorporated herein in its entirety. An optical measurement system, as described by Sybille Frank et al. in PPS 25 Intern. Conf. Polym. Proc. Soc 2009 or Proceedings of the SPIE, Volume 6831, pp 68130T-68130T-8 20 (2008) was used for characterizing the surface quality. This method consists of two aspects:

1. Image recording:

The basic principle of the measurement system is to illuminate the plates with a defined light source (LED) in a closed environment and to record an image with a CCD-camera system.

2. Image analysis:

The specimen is floodlit from one side and the upwards reflected portion of the light is deflected via two mirrors to a CCD-sensor. The such created grey value image is analysed in lines. From the recorded deviations of grey values the mean square error (MSE) is calculated allowing a quantification of surface quality, i.e. the larger the MSE value the more pronounced is the surface defect.

Generally, for one and the same material, the tendency to flow marks increases when the injection speed is increased.

For this evaluation plaques 440×148×2.8 mm with grain VW K50 and a filmgate of 1.4 mm were used and were produced with different filling times of 1.5, 3 and 6 sec respectively.

Further conditions:

Melt temperature: 240°C
Mould temperature 30°C
Dynamic pressure: 10 bar hydraulic

**m) Fogging**

Fogging was measured according to ISO 75201:2011-11, method B (gravimetric method) on compression-moulded specimens (diameter 80 mm +/- 1mm, thickness 2 mm) cut out from an injection moulded plate. With this method, the mass of fogging condensate on aluminium foil in mg by means weighing of foil before and after the fogging test is determined. The term "fogging" refers to a fraction of volatile substances condensed on glass parts as e.g. the windscreen of a vehicle.

**n) Screening of organic emissions by thermo-desorption analysis (LBS and HBS)**

This method describes the semi-quantitative determination of organic compounds emitting from polyolefins. It is similar to the VDA 278 (October 2011) but includes specific adjustments.

Directly after the production the sample (injection moulded plaque, DIN-A5) is sealed in an aluminium-coated polyethylene bag and provided to the lab within 14 days. In the lab, it is stored openly for 7 days below 25 °C. After this period, an aliquot of $60 \pm 5$ mg is prepared from the stored sample. Trimming the aliquot should aim for a maximum coherent area. It is not the aim to create the largest possible surface area by cutting the aliquot into smaller pieces. The diameter of the sample injection tube should be used first. Length and thickness should be chosen accordingly, considering the specified aliquot weight. The aliquot is directly desorbed using heat and a flow of helium gas. Volatile and semi-volatile organic compounds are extracted into the gas stream and cryo-focused prior to the injection into a gas chromatographic (GC) system for analysis. The method comprises two extraction stages: In the analysis of low-boiling substances (LBS) the aliquot is desorbed at 90 °C for 30 min to determine volatile organic compounds in the boiling / elution range up to n-C25 (n-pentacosane). The analysis of high-boiling substances (HBS) involves a further desorption step of the same aliquot at 120 °C for 60 min to determine semi-volatile compounds in the boiling / elution range from n-C14 (n-tetradecane) to n-C32 (n-dotriacontane).

Similar to the VOC and FOG value in the VDA 278, the LBS is calculated as toluene equivalent (TE) and the HBS is calculated as hexadecane equivalent (HE) applying a semi-quantitation and a respective calibration. The result is expressed in "µg/g".

Integration parameters for the LBS and HBS evaluation are chosen in such way that the "area reject" corresponds to the area of 1 µg/g (TE and HE, respectively). Thus, smaller peaks do not add to the semi-quantitative result. The GC oven program is kept the same, no matter if a calibration run, an LBS run or an HBS run was performed. It starts at 50 °C (1 min hold), followed by a ramp of 10 °C/min and an end temperature of 320 °C (10 min hold). For the GC column an Agilent DB5: 50 m x 250 µm x 0.25 µm (or comparable) is used. The method requires a Thermal Desorption System TDS 3 (Gerstel) and a Cooled Injection System CIS 4 (Gerstel) as well as a GC system with a flame ionisation detector (FID) but does not involve a mass spectrometer. Instead of 280 °C the CIS end temperature is always set to 380 °C.

### o) CIELAB color space (L*a*b*)

In the CIE L*a*b* uniform color space, the color coordinates are: L*-the lightness coordinate; a*-the red/green coordinate, with +a* indicating red, and -a* indicating green; and b*-the yellow/blue coordinate, with +b* indicating yellow, and -b* indicating blue. The L*, a*, and b*coordinate axis define the three dimensional CIE color space. Standard Konica/Minolta Colorimeter CM-3700A.

### p) Inorganic residues

Inorganic residues are quantified according to DIN ISO 1172:1996 using a Perkin Elmer TGA 8000. Approximately 10-20 mg of material was placed in a platinum pan. The temperature was equilibrated at 50°C for 10 minutes, and afterwards raised to 950°C under nitrogen at a heating rate of 20 °C/min. The ash content was evaluated as the weight % at 850°C.

### q) Limonene detection

Limonene quantification can be carried out using solid phase microextraction (HS-SPME-GC-MS) by standard addition.

50 mg ground samples are weighed into 20 mL headspace vials and after the addition of limonene in different concentrations and a glass-coated magnetic stir bar, the vial is closed with a magnetic cap lined with silicone/PTFE. Micro capillaries (10 pL) are used to add diluted limonene standards of known concentrations to the sample. Addition of 0, 2, 20 and 100 ng equals 0 mg/kg, 0.1 mg/kg, 1mg/kg and 5 mg/kg limonene, in addition standard amounts of 6.6 mg/kg, 11 mg/kg and 16.5 mg/kg limonene is used in combination with some of the samples tested in this application. For quantification, ion-93 acquired in SIM mode is used. Enrichment of the volatile fraction is carried out by headspace solid phase microextraction with a 2 cm stable flex 50/30 pm DVB/Carboxen/PDMS fibre at 60°C for 20 minutes. Desorption is carried out directly in the heated injection port of a GCMS system at 270°C.

GCMS Parameters:

Column: 30 m HP 5 MS 0.25*0.25
Injector: Splitless with 0.75 mm SPME Liner, 270°C
Temperature program: -10°C (1 min)
Carrier gas: Helium 5.0, 31 cm/s linear velocity, constant flow
MS: Single quadrupole, direct interface, 280°C interface temperature
Acquisition: SIM scan mode
Scan parameter: 20-300 amu
SIM Parameter: m/Z 93, 100 ms dwell time

### Experiments

### a) Heterophasic propylene copolymers HECO1, HECO2 and HECO3

Catalyst systems:

For the polymerization process of HECO2 and HECO3 a traditional trans-esterified high yield $MgCl_2$-supported Ziegler-Natta polypropylene catalyst component comprising diethyl phthalate as internal donor was used. The catalyst component and its preparation concept are described in general for example in patent publications EP491566, EP591224 and EP586390. Accordingly, the catalyst component was prepared as follows: first, 0.1 mol of $MgCl_2$ x 3 EtOH was suspended under inert conditions in 250 ml of decane in a reactor at atmospheric pressure. The solution was cooled to -15°C and the 300 ml of cold $TiCl_4$ was added while maintaining the temperature at said temperature. Then, the temperature of the slurry was increased slowly to 20 °C. At this temperature, 0.02 mol of dioctylphthalate (DOP) was added to the slurry. After the addition of the phthalate, the temperature was raised to 135 °C during 90 minutes and the slurry was allowed to stand for 60 minutes. Then, another 300 ml of $TiCl_4$ was added and the temperature was kept at 135 °C for 120 minutes. After this, the catalyst was filtered from the liquid and washed six times with 300 ml heptane at 80 °C. Then, the solid catalyst component was filtered and dried.

The catalyst was further modified (VCH modification of the catalyst). 35 ml of mineral oil (Paraffinum Liquidum PL68) was added to a 125 ml stainless steel reactor followed by 0.82 g of triethyl aluminum (TEAL) and 0.33 g of dicyclopentyl dimethoxy silane (donor D) under inert conditions at room temperature. After 10 minutes 5.0 g of the catalyst prepared above (Ti content 1.4 wt.-%) was added and after additionally 20 minutes 5.0 g of vinylcyclohexane (VCH) was added. The temperature was increased to 60 °C during 20 minutes and was kept there for 20 hours. Finally, the temperature was decreased to 20 °C and the concentration of unreacted VCH in the oil/catalyst mixture was analysed and was found to be 200 ppm weight.

The catalyst used for producing HECO1 was a Ziegler-Natta catalyst commercially available from Lyondell Basell (IT), under the trade name ZN180M.

HECO1 was made in prepolymerization / loop reactor / gas phase reactor 1 / gas phase reactor 2 configuration followed by a pelletization step.

HECO2 and HECO3 were made in prepolymerization / loop reactor / gas phase reactor 1 / gas phase reactor 2 / gas phase reactor 3 configuration followed by a pelletization step.

For HECO1, HECO2 and HECO3 the catalyst system defined above was used in combination with triethyl-aluminium (TEAL) as co-catalyst and dicyclopentadienyl-dimethoxy silane (donor D) as external donor.

The polymerization conditions as shown in Table 1.

**Table 1:** Polymerization conditions for the HECOs

|  |  | HECO1 | HECO2 | HECO3 |
|---|---|---|---|---|
| **Prepolymerization** |  |  |  |  |
| [Co]/[ED] | [mol/mol] | 10 | 6 | 40 |
| [Co]/[Ti] | [mol/mol] | 220 | 200 | 230 |
| Temperature | [°C] | 30 | 30 | 30 |
| Residence time | [min] | 5 | 0.25 | 5 |
| **Loop reactor** |  |  |  |  |
| Temperature | [°C] | 75 | 85 | 72 |
| Split | [wt.-%] | 52 | 35 | 30 |
| H2/C3 | [kg/ton] | 22 | 65 | 19 |
| $MFR_2$ | [g/10 min] | 160 | 140 | 110 |
| **1st Gas phase reactor** |  |  |  |  |
| Temperature | [°C] | 80 | 85 | 80 |
| Split | [wt.-%] | 34 | 40 | 35 |
| H2/C3 | [mol/kmol] | 175 | 21 | 137 |
| $MFR_2$ | [g/10 min] | 160 | 55 | 80 |
| XCS | [wt.-%] | 2.0 | 1.9 | 2.0 |
| **2nd Gas phase reactor** |  |  |  |  |
| Temperature | [°C] | 80 | 85 | 70 |
| Split | [wt.-%] | 14 | 15 | 17 |
| H2/C3 | [mol/kmol] | 250 | 15 | 119 |
| C2/C3 | [mol/kmol] | 550 | 210 | 515 |
| $MFR_2$ | [g/10 min] | 99 | 20 | 15 |
| C2 | [wt.-%] | 6.5 | 4.5 | 7.9 |
| **3rd Gas phase reactor** |  |  |  |  |
| Temperature | [°C] | - | 85 | 85 |
| Split | [wt.-%] | - | 10 | 18 |
| H2/C3 | [mol/kmol] | - | 10 | 285 |
| C2/C3 | [mol/kmol] | - | 210 | 1429 |

(continued)

| C2 | [wt.-%] | 6.5 | 4.5 | 7.9 |
|---|---|---|---|---|
| **3rd Gas phase reactor** | | | | |
| C2 | [wt.-%] | - | 7 | 18.9 |
| **Final Properties (pellet)** | | | | |
| MFR$_2$ | [g/10 min] | 100 | 5.5 | 15 |
| C2 | [wt.-%] | 6.0 | 6.5 | 20.0 |
| SF (CRYSTEX) | [wt.-%] | 14.5 | 22.4 | 30.0 |
| C2(SF) | [wt.-%] | 32 | 23 | 45 |
| iV(SF) | [dL/g] | 1.9 | 5.6 | 2.4 |
| CF (CRYSTEX) | [wt.-%] | 85.5 | 77.6 | 70.0 |
| C2(CF) | [wt.-%] | 2 | 2 | 9 |
| iV(CF) | [dL/g] | 1.15 | 1.90 | 1.44 |
| C2(XCS) | [wt.-%] | 54.0 | 22.6 | 44.8 |
| iV(XCS) | [dL/g] | 2.0 | 5.5 | 2.3 |
| T$_m$ | [°C] | 165 | 166 | 165 |
| T$_c$ | [°C] | 121 | 115 | 115 |
| Tensile modulus | [MPa] | 1400 | 1080 | 800 |
| Charpy NIS, 23°C | [kJ/m$^2$] | 3.2 | 48 | 35 |

The heterophasic copolymers HECO1, HECO2 and HECO3 were compounded in a co-rotating twin-screw extruder Coperion ZSK 47 at 220°C with 0.15 wt.-% antioxidant (Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4); 0.05 wt.-% of Ca-stearate (CAS-no.1592-23-0, commercially available from Faci, Italy).

The pellets of the heterophasic copolymers HECO1, HECO2 and HECO3 were aerated before use, to remove volatile organic components as described in EP 3 786 190 A1.

**b) Mixed-plastics polypropylene blend**

The properties of the mixed-plastic polypropylene blend are given in Table 2.

**Table 2:** Properties of mixed-plastic polypropylene blends

| | | **Blend** |
|---|---|---|
| MFR$_2$ | [g/10 min] | 19 |
| C2(total) | [wt.-%] | 5.3 |
| SF | [wt.-%] | 11.0 |
| C2(SF) | [wt.-%] | 26.0 |
| iV(SF) | [dL/g] | 1.66 |
| CF | [wt.-%] | 89.0 |
| C2(CF) | [wt.-%] | 3.0 |
| iV(CF) | [dL/g] | 1.61 |
| Limonene content | [ppm] | 157 |
| Ash content | [wt.-%] | 0.9-1.5 |
| CIELAB L* | [-] | 87.01 |

(continued)

|  |  | **Blend** |
|---|---|---|
| CIELAB a* | [-] | -1.90 |
| CIELAB b* | [-] | 5.34 |
| Tensile modulus | [MPa] | 1350 |
| Charpy NIS (+23°C) | [kJ/m$^2$] | 4.0 |

The pellets of the mixed-plastic polypropylene blend were aerated before use, to remove volatile organic components as described in EP 3 786 190 A1.

**c) Compounding of Inventive and Comparative Compositions**

The inventive and comparative compositions were prepared based on the recipes indicated in Table 3 by compounding in a co-rotating twin-screw extruder Coperion ZSK 40 at 220°C.
In addition to the HECOs and the mixed-plastic polypropylene blend described above, the following commercially available components were also employed:

Plastomer 1     an elastomeric ethylene-octene copolymer with a trade name of Engage 8180, commercially available from Dow Chemicals (USA), having an MFR$_2$ (190 °C) of 0.5 g/10 min and a density of 863 kg/m$^3$.

Plastomer 2     an elastomeric ethylene-octene copolymer with a trade name of Engage 8842, commercially available from Dow Chemicals (USA), having an MFR$_2$ (190 °C) of 1.0 g/10 min and a density of 857 kg/m$^3$.

Filler 1     talc with a trade name of HAR T84, commercially available from Imerys (France), with median diameter d50 of 2.0 $\mu$m and top cut diameter d95 of 10.0 $\mu$m

Filler 2     talc with a trade name of Jetfine 3CA, commercially available from Imerys (France), with median diameter d50 of 3.9 $\mu$m and top cut diameter d95 of 7.8 $\mu$m.

Black MB     a polyethylene based masterbatch CBMB LD-09 A02 from Borealis AG (Norway). It contains 40 wt.-% of pigment.

White MB     a polyethylene based masterbatch Masterminds PE white 90/1111 from QolorTech (The Netherlands). It contains 70 wt.- % of pigment.

Additives MB1     an additive masterbatch, consisting of 1.50 wt.-% of a carrier propylene homopolymer with a trade name of HC001 A, commercially available from Borealis AG (Austria), 0.10 wt.-% of an antioxidant with a trade name of Irgafos 168 (CAS-no. 31570-04-4), available from BASF AG (Germany), 0.15 wt.-% of an antioxidant with a trade name of Irganox 1076 (CAS-no. 2082-79-3), commercially available from BASF AG (Germany), 0.40 wt.-% of bisphenol A-epoxy resin with a trade name of Araldite GT 7072 ES (CAS-no. 25036-25-3), commercially available from Huntsman Corporation (USA), 2.00 wt.-% of silicon masterbatch i.e. dimethyl siloxane:polypropylene=50:50 from Dow Corning, and 0.20 wt.-% of a UV-stabiliser masterbatch with a trade name of Cyasorb UV-3808PP5, commercially available from Cytec Industries, Inc. (USA)

Additives MB2     an additive masterbatch, consisting of 1.20 wt.-% of a carrier propylene homopolymer with a trade name of HC001 A, commercially available from Borealis AG (Austria), 0.10 wt.-% of an antioxidant with a trade name of Irgafos 168 (CAS-no. 31570-04-4), available from BASF AG (Germany), 0.25 wt.-% of an antioxidant with a trade name of Irganox 1076 (CAS-no. 2082-79-3), commercially available from BASF AG (Germany), 0.50 wt.-% of bisphenol A-epoxy resin with a trade name of Araldite GT 7072 ES (CAS-no. 25036-25-3), commercially available from Huntsman Corporation (USA), 2.00 wt.-% of silicon masterbatch i.e. dimethyl siloxane:polypropylene=50:50 from Dow Corning. 0.20 wt.-% of a UV-stabiliser masterbatch with a trade name of Cyasorb UV-3808PP5, commercially available from Cytec Industries, Inc. (USA), and 0.20 wt.-% of a slip agent with a trade name of Crodamide EBS beads (CAS-no. 203-755-6), commercially available from Croda International (UK).

The recipes of the inventive and comparative compositions are given in Table 3. The properties of the inventive and comparative compositions are given in Table 4.

**Table 3:** Recipes for inventive and comparative examples

| | | IE1 | IE2 | IE3 | IE4 | IE5 | CE1 | CE2 | CE3 | CE4 | CE5 | CE6 |
|---|---|---|---|---|---|---|---|---|---|---|---|---|
| HECO1 | [wt.-%] | 34.15 | 23.65 | 18.15 | 25.15 | 9.15 | --- | 31.65 | 29.15 | 20.55 | 20.55 | 19.55 |
| HECO2 | [wt.-%] | 30.0 | 23.0 | 30.0 | 23.0 | 30.0 | 24.15 | 15.0 | --- | --- | 10.0 | 17.0 |
| HECO3 | [wt.-%] | --- | --- | --- | --- | --- | --- | --- | --- | 20.0 | 10.0 | --- |
| Blend | [wt.-%] | 15.0 | 30.0 | 30.0 | 30.0 | 45.0 | 45.0 | 30.0 | 45.0 | 25.0 | 25.0 | 30.0 |
| Plastomer 1 | [wt.-%] | --- | 10.0 | 10.0 | 10.0 | --- | --- | --- | --- | 10.0 | 10.0 | 10.0 |
| Plastomer 2 | [wt.-%] | 5.0 | --- | --- | --- | 5.0 | 15.0 | 10.0 | 15.0 | --- | --- | --- |
| Filler 1 | [wt.-%] | 10.0 | --- | 6.0 | 6.0 | 5.0 | 10.0 | 7.5 | 5.0 | --- | --- | --- |
| Filler 2 | [wt.-%] | --- | 7.5 | --- | --- | --- | --- | --- | --- | 15.0 | 15.0 | 15.0 |
| Additives MB 1 | [wt.-%] | 4.35 | 4.35 | 4.35 | 4.35 | 4.35 | 4.35 | 4.35 | 4.35 | --- | --- | --- |
| Additives MB2 | [wt.-%] | --- | --- | --- | --- | --- | --- | --- | --- | 4.45 | 4.45 | 4.45 |
| Black MB | [wt.-%] | 1.5 | 1.5 | 1.5 | 1.5 | 1.5 | 1.5 | 1.5 | 1.5 | 4.0 | 4.0 | 2.6 |
| White MB | [wt.-%] | --- | --- | --- | --- | --- | --- | --- | --- | 1.0 | 1.0 | 1.4 |

**Table 4:** Properties of the inventive and comparative compositions

| | | IE1 | IE2 | IE3 | IE4 | IE5 | CE1 | CE2 | CE3 | CE4 | CE5 | CE6 |
|---|---|---|---|---|---|---|---|---|---|---|---|---|
| $MFR_2$ | [g/10 min] | 15 | 13 | 11 | 13 | 10 | 7 | 16 | 17 | 17 | 13 | 11 |
| SF | [wt.-%] | 23 | 25 | 26 | 25 | 22 | 30 | 25 | 28 | 28 | 27 | 24 |
| C2(SF) | [wt.-%] | 39 | 46 | 39 | 44 | 38 | 54 | 49 | 57 | 55 | 55 | n.m. |
| iV(SF) | [dL/g] | 2.40 | 3.01 | 3.22 | 3.00 | 2.71 | 2.39 | 2.10 | 1.71 | 2.10 | 2.36 | 2.32 |
| CF | [wt.-%] | 77 | 75 | 74 | 75 | 78 | 70 | 75 | 72 | 72 | 73 | 76 |
| C2(CF) | [wt.-%] | 3.5 | 6.0 | 7.0 | 6.0 | 3.2 | 3.5 | 3.0 | 4.0 | 9.0 | 7.0 | n.m. |
| iV(CF) | [dL/g] | 1.50 | 1.60 | 1.67 | 1.60 | 1.67 | 1.80 | 1.53 | 1.49 | 1.46 | 1.55 | 1.67 |
| iV(SF)/iV(CF) | [-] | 1.60 | 1.88 | 1.93 | 1.88 | 1.62 | 1.33 | 1.37 | 1.15 | 1.44 | 1.52 | 1.39 |
| C2(SF)/C2(CF) | [-] | 11.1 | 7.7 | 5.6 | 7.3 | 11.9 | 15.4 | 16.3 | 14.3 | 6.1 | 7.9 | n.m. |
| Tensile Modulus (TM) | [MPa] | 1850 | 1429 | 1356 | 1412 | 1483 | 1375 | 1588 | 1349 | 1647 | 1666 | 1738 |
| Charpy NIS (+23 °C) | [kJ/m²] | 9 | 29 | 49 | 39 | 12 | 51 | 11 | 11 | 22 | 40 | 17 |
| Charpy NIS (-20 °C) | [kJ/m²] | 4.0 | 5.3 | 6.1 | 5.1 | 4.0 | 7.0 | 4.0 | 4.6 | 5.4 | 5.2 | 4.7 |
| Coeff. = TM * Charpy NIS (+23 °C) | [MPa*kJ/m²] | 16650 | 41441 | 66444 | 55068 | 17796 | 70125 | 17468 | 14839 | 36234 | 66640 | 29546 |
| Tiger stripes (MSE, 1.5 s) | [-] | 6 | 15 | 17 | 18 | 21 | 92 | 21 | 69 | 26 | 13 | 15 |
| Tiger stripes (MSE, 3 s) | [-] | 9 | 8 | 11 | 11 | 11 | 62 | 13 | 41 | 15 | 10 | 12 |
| Tiger stripes (MSE, 6 s) | [-] | 12 | 6 | 6 | 9 | 6 | 22 | 12 | 8 | 5 | 6 | n.m. |
| 0.00015 · coeff. + 20 | [-] | 22.5 | 26.2 | 30.0 | 28.3 | 22.7 | 30.5 | 22.6 | 22.2 | 25.4 | 30.0 | 24.4 |
| -0.5 · filler + 15 | [-] | 10.0 | 11.3 | 12.0 | 12.0 | 12.5 | 10.0 | 11.3 | 12.5 | 7.5 | 7.5 | 7.5 |
| Scratch resistance (10 N) | [-] | 0.85 | 0.50 | 0.61 | 0.53 | 0.49 | 1.11 | 0.62 | 0.31 | 0.17 | 0.44 | 0.65 |
| LBS | [µg/g] | 49 | 30 | 41 | 35 | 26 | 33 | 38 | 43 | 35 | 34 | 30 |
| HBS | [µg/g] | 421 | 280 | 309 | 285 | 328 | 269 | 372 | 409 | 219 | 199 | 153 |
| Fogging | [mg] | 0.38 | 0.48 | 0.45 | 0.45 | 0.43 | 0.35 | 0.34 | 0.39 | 0.40 | 0.40 | 0.52 |

n.m. = not measured

Figure 1 illustrates the balance of properties of surface appearance, stiffness and impact properties of examples IE1-IE5 and CE1-CE6 in form of a graph of tiger stripes (MSE surface quality, 1.5 s) as function of the stiffness-impact coefficient (Tensile Modulus * Charpy NIS (+23 °C)). The lower the MSE value and the higher the coefficient the better the quality of the compound.

It can be seen from Figure 1 that the inventive examples show an improved balance of properties of surface appearance, stiffness and impact properties compared to CE1-CE4 and a comparable balance of properties compared to CE5 and CE6.

The inventive examples additionally show a good processability (melt flow rate), scratch resistance and low emissions (LBS, HBS, fogging) and therefore qualify as injection moulding compositions for interior automotive applications.

The inventive examples show that comparable or even superior materials can be obtained with high amounts of 15 to 45 wt.-% of recyclate material and low amounts of talc of 5 to 10 wt.-%.

**Claims**

1. A composition suitable for automotive applications

   obtainable by blending at least components (A), (B), (C), (D) and (E):

   (A) from 5.0 to 40.0 wt.-% of a first heterophasic propylene copolymer;
   (B) from more than 20.0 to 35.0 wt.-% of a second heterophasic propylene copolymer;
   (C) from 10.0 wt.-% to 50.0 wt.-% of a mixed-plastics polypropylene blend;
   (D) from 2.5 wt.-% to 15.0 wt.-% of an ethylene-based plastomer; and
   (E) from 2.5 wt.-% to less than 12.5 wt.-% of an inorganic filler;

   whereby all percentages refer to the total composition, and whereby the first heterophasic propylene copolymer (A) comprises a matrix phase and an elastomer phase dispersed therein and has

   - a melt flow rate ($MFR_2$), determined according to ISO 1133 at 230 °C and 15 2.16 kg, in the range from 90 to 250 g/10 min; and
   - an intrinsic viscosity, determined according to DIN ISO 1628/1, of the soluble fraction (iV(SF)), according to CRYSTEX QC analysis, in the range from 1.50 to 4.00 dl/g;

   the second heterophasic propylene copolymer (B) comprises a matrix phase and an elastomer phase dispersed therein and has

   - a melt flow rate $MFR_2$, determined according to ISO 1133 at 230 °C and 2.16 kg, in the range from 3.0 to 30 g/10 min and
   - an intrinsic viscosity, determined according to DIN ISO 1628/1, of the soluble fraction (iV(SF)), according to CRYSTEX QC analysis, in the range from 4.10 to 10.00 dl/g;

   the mixed-plastics polypropylene blend (C) has

   - a crystalline fraction (CF) content determined according to CRYSTEX QC analysis in the range from 85.0 to 96.0 wt.-%, and
   - a soluble fraction (SF) content determined according to CRYSTEX QC analysis in the range from 4.0 to 15.0 wt.-%, whereby
   - said crystalline fraction (CF) has an ethylene content (C2(CF)), as determined by FT-IR spectroscopy calibrated by quantitative $^{13}$C-NMR spectroscopy, in the range from 1.0 to 10.0 wt.-%; and
   - said soluble fraction (SF) has an intrinsic viscosity (iV(SF)) in the range 5 from 0.9 to 2.1 dl/g;

   the ethylene based plastomer (D) being a copolymer of ethylene with comonomer units selected from alpha-olefins having from 3 to 12 carbon atoms, preferably from alpha-olefins having from 4 to 10 carbon atoms, most preferably from 1-octene, has

   - a melt flow rate $MFR_2$ of 0.2 to 2.5 g/10min, determined according to ISO 1133 at 190 °C and 2.16 kg; and
   - a density of 850 to 870 kg/m$^3$, determined according to ISO 1183; and

the composition has a melt flow rate $MFR_2$, determined according to ISO 1133 at 230 °C and 2.16 kg, in the range from 5.0 to less than 20.0 g/10 min.

2. The composition according to claim 1, wherein the inorganic filler (E) is talc having

   - a median particle size $d_{50}$ before compounding of 0.3 to 30.0 micrometers, preferably 1.5 to 15.0 micrometers; and/or
   - a top-cut particle size $d_{95}$ before compounding of 1.0 to 50.0 micrometers, preferably 5.0 to 35.0 micrometers.

3. The composition according to claims 1 or 2 having a crystalline fraction (CF) and a soluble fraction (SF) in the CRYSTEX QC analysis, whereby

   - a crystalline fraction (CF) content determined according to CRYSTEX QC analysis is in the range from 65.0 to 85.0 wt.-%, and
   - a soluble fraction (SF) content determined according to CRYSTEX QC analysis is in the range from 15.0 to 35.0 wt.-%, whereby
   - said crystalline fraction (CF) has an ethylene content (C2(CF)), as determined by FT-IR spectroscopy calibrated by quantitative $^{13}$C-NMR spectroscopy, in the range from 1.0 to 10.0 wt.-%; and/or
   - said crystalline fraction (CF) has an intrinsic viscosity (iV(CF)), determined according to DIN ISO 1628/1, of less than 2.0 dl/g; and/or
   - said soluble fraction (SF) has an ethylene content (C2(SF)), as determined by FT-IR spectroscopy calibrated by quantitative $^{13}$C-NMR spectroscopy, in the range from 30 to 50 wt.-%; and/or
   - said soluble fraction (SF) has an intrinsic viscosity (iV(SF)), determined according to DIN ISO 1628/1, of more than 2.1 dl/g; and/or
   - the composition has a ratio of the intrinsic viscosity of the soluble fraction to the intrinsic viscosity of the crystalline fraction (iV(SF)/iV(CF)) of more than 1.0; and/or
   - the composition has a ratio of the ethylene contents of the soluble fraction and crystalline fraction (C2(SF)/C2(CF)) of 2.5 to 15.0.

4. The composition according to any one of the preceding claims having a tensile modulus of from 1200 MPa to 2200 MPa, preferably from 1300 MPa to 2000 MPa, determined according to ISO 527-2.

5. The composition according to any one of the preceding claims having a Charpy Notched Impact Strength at 23 °C of from 7.5 kJ/m$^2$ to 55.0 kJ/m$^2$, preferably from 8.5 to 50.0 kJ/m$^2$ and/or Charpy Notched Impact Strength at -20 °C of from 2.5 kJ/m$^2$ to 10.0 kJ/m$^2$, preferably from 3.5 to 7.5 kJ/m$^2$, determined according to ISO 179 1eA at +23°C or -20 °C.

6. The composition according to any one of the preceding claims having one or more preferably all of the following properties

   - a content of low boiling organic substances (LBS), determined by screening of organic emissions by thermo-desorption analysis, in the range from 5 to 100 $\mu$g/g, preferably from 10 to 75 $\mu$g/g;
   - a content of high boiling organic substances (HBS), determined by screening of organic emissions by thermo-desorption analysis, in the range from 100 to 500 $\mu$g/g, preferably from 200 to 450 $\mu$g/g; and
   - an amount of fogging, determined according to the gravimetric method DI 75201:2011-11, method B, in the range from 0.05 to 1.00 mg, preferably from 0.15 to 0.75 mg.

7. An article comprising the composition according to any one of the preceding claims in an amount of from 90 wt.-% to 100 wt.-%.

8. The article according to claim 7 being a moulded article, preferably a moulded automotive article.

9. The article according to claims 7 or 8 having a MSE surface quality at 1.5 s of below 25, preferably below 23 and/or a MSE surface quality at 3 s of below 15, preferably below 13 and/or a MSE surface quality at 6 s of below 15, preferably below 13, wherein the MSE surface quality is determined on plaques having the dimensions of 440×148×2.8 mm, which were produced with different filling times of 1.5, 3 and 6 sec with grain VW K50 and a filmgate of 1.4 mm, by illuminating the plates with a defined light source (LED) in a closed environment, recording an image with a CCD-camera system, analysing the image and calculating the MSE surface quality.

10. The article according to any one of claims 7 to 9 having a MSE surface quality at 1.5 s meeting the following dimensionless in-equation (I):

$$MSE, 1.5\ s < 0.00015 \cdot TM \cdot Charpy\ NIS, 23°C + 20$$

wherein

MSE, 1.5 s = MSE surface quality at 1.5 s, determined on plaques having the dimensions of $440 \times 148 \times 2.8$ mm, which were produced with different filling times of 1.5 sec with grain VW K50 and a filmgate of 1.4 mm, by illuminating the plates with a defined light source (LED) in a closed environment, recording an image with a CCD-camera system, analysing the image and calculating the MSE surface quality
TM = tensile modulus, determined according to ISO 527-2, in [MPa$^{-1}$] and

Charpy NIS, 23°C = Charpy notched impact strength, determined according to ISO 179 1eA at +23°C, in [m$^2$/kJ].

11. The article according to any one of claims 7 to 10 having a MSE surface quality at 3 s meeting the following dimensionless in-equation (II):

$$MSE, 3\ s < -0{,}5 \cdot filler + 15$$

wherein
MSE, 3 s = MSE surface quality at 3 s, determined on plaques having the dimensions of $440 \times 148 \times 2.8$ mm, which were produced with different filling 10 times of 3 sec with grain VW K50 and a filmgate of 1.4 mm, by illuminating the plates with a defined light source (LED) in a closed environment, recording an image with a CCD-camera system, analysing the image and calculating the MSE surface quality, and

$$filler = the\ inorganic\ filler\ (E)\ content\ in\ [1/wt.\text{-}\%].$$

12. The article according to any one of claims 7 to 11 having a scratch resistance at 10 N in the range from 0.00 to 1.00, preferably from 0.10 to 0.90.

13. Use of the composition according to any one of claims 1 to 6 for injection moulding of articles, preferably automotive articles, more preferably automotive interior articles.

**Patentansprüche**

1. Für Automobilanwendungen geeignete Zusammensetzung

erhältlich durch Mischen von mindestens den Komponenten (A), (B), (C), (D) und (E):

(A) von 5,0 bis 40,0 Gew.-% eines ersten heterophasischen Propylencopolymers;
(B) von mehr als 20,0 bis 35,0 Gew.-% eines zweiten heterophasischen Propylencopolymers;
(C) von 10,0 Gew.-% bis 50,0 Gew.-% eines Mischkunststoff Polypropylengemischs;
(D) von 2,5 Gew.-% bis 15,0 Gew.-% eines Plastomers auf Ethylenbasis und
(E) von 2,5 Gew.-% bis weniger als 12,5 Gew.-% eines anorganischen Füllstoffs;

wobei sich alle Prozentangaben auf die Gesamtzusammensetzung beziehen, und wobei
das erste heterophasische Propylencopolymer (A) eine Matrixphase und eine darin dispergierte Elastomerphase umfasst und Folgendes aufweist

- eine Schmelzflussrate (MFR$_2$), bestimmt nach ISO 1133 bei 230 °C und 2,16 kg, im Bereich von 90 bis 250 g/10 min; und

- eine intrinsische Viskosität der löslichen Fraktion (iV(SF)), bestimmt nach DIN ISO 1628/1, gemäß CRYSTEX QC Analyse im Bereich von 1,50 bis 4,00 dl/g;

das zweite heterophasische Propylencopolymer (B) eine Matrixphase und eine darin dispergierte Elastomerphase umfasst und Folgendes aufweist

- eine Schmelzflussrate MFR$_2$, bestimmt nach ISO 1133 bei 230 °C und 2,16 kg, im Bereich von 3,0 bis 30 g/10 min und
- eine intrinsische Viskosität der löslichen Fraktion (iV(SF)), bestimmt nach DIN ISO 1628/1, gemäß CRYSTEX QC Analyse im Bereich von 4,10 bis 10,00 dl/g;

das Mischkunststoff Polypropylengemisch (C) Folgendes aufweist

- einen Gehalt an kristalliner Fraktion (CF), bestimmt nach der CRYSTEX QC Analyse, im Bereich von 85,0 bis 96,0 Gew.-%, und
- einen Gehalt an löslicher Fraktion (SF), bestimmt gemäß CRYSTEX QC Analyse im Bereich von 4,0 bis 15,0 Gew.-%, wobei
- die kristalline Fraktion (CF) einen Ethylengehalt (C2(CF)), bestimmt durch FT-IR-Spektroskopie, kalibriert durch quantitative $^{13}$C-NMR-Spektroskopie, im Bereich von 1,0 bis 10,0 Gew.-% aufweist; und
- die lösliche Fraktion (SF) eine intrinsische Viskosität (iV(SF)) im Bereich von 0,9 bis 2,1 dl/g aufweist;

das Plastomer auf Ethylenbasis (D), das ein Copolymer von Ethylen mit Comonomereinheiten ist, die aus Alpha-Olefinen mit 3 bis 12 Kohlenstoffatomen, vorzugsweise aus Alpha-Olefinen mit 4 bis 10 Kohlenstoffatomen, am meisten bevorzugt aus 1-Octen, ausgewählt sind, Folgendes aufweist

- eine Schmelzflussrate MFR$_2$ von 0,2 bis 2,5 g/10min, bestimmt nach ISO 1133 bei 190 °C und 2,16 kg; und
- eine Dichte von 850 bis 870 kg/m$^3$, bestimmt nach ISO 1183; und

die Zusammensetzung eine Schmelzflussrate MFR$_2$, bestimmt nach ISO 1133 bei 230 °C und 2,16 kg, im Bereich von 5,0 bis weniger als 20,0 g/10 min aufweist.

**2.** Zusammensetzung nach Anspruch 1, wobei der anorganische Füllstoff (E) Talkum ist mit

- einer mittleren Teilchengröße d$_{50}$ vor dem Compoundieren von 0,3 bis 30,0 Mikrometer, vorzugsweise 1,5 bis 15,0 Mikrometer; und/oder
- einer Top-Cut-Teilchengröße d$_{95}$ vor dem Compoundieren von 1,0 bis 50,0 Mikrometern, vorzugsweise 5,0 bis 35,0 Mikrometern.

**3.** Zusammensetzung nach Anspruch 1 oder 2 mit einer kristallinen Fraktion (CF) und einer löslichen Fraktion (SF) in der CRYSTEX QC Analyse, wobei

- der Gehalt an kristalliner Fraktion (CF), der gemäß der CRYSTEX QC Analyse bestimmt wird, im Bereich von 65,0 bis 85,0 Gew.-% liegt und
- der Gehalt an löslicher Fraktion (SF), der gemäß der CRYSTEX QC Analyse bestimmt wird, im Bereich von 15,0 bis 35,0 Gew.-% liegt, wobei
- die kristalline Fraktion (CF) einen Ethylengehalt (C2(CF)), bestimmt durch FT-IR-Spektroskopie, kalibriert durch quantitative $^{13}$C-NMR-Spektroskopie, im Bereich von 1,0 bis 10,0 Gew.-% aufweist; und/oder
- die kristalline Fraktion (CF) eine intrinsische Viskosität (iV(CF)), bestimmt nach DIN ISO 1628/1, von weniger als 2,0 dl/g aufweist; und/oder
- die lösliche Fraktion (SF) einen Ethylengehalt (C2(SF)), bestimmt durch FT-IR-Spektroskopie, kalibriert durch quantitative $^{13}$C-NMR-Spektroskopie, im Bereich von 30 bis 50 Gew.-% aufweist; und/oder
- die lösliche Fraktion (SF) eine intrinsische Viskosität (iV(SF)), bestimmt nach DIN ISO 1628/1, von mehr als 2,1 dl/g aufweist; und/oder
- die Zusammensetzung ein Verhältnis der intrinsischen Viskosität der löslichen Fraktion zur intrinsischen Viskosität der kristallinen Fraktion (iV(SF)/iV(CF)) von mehr als 1,0 aufweist; und/oder
- die Zusammensetzung ein Verhältnis der Ethylengehalte der löslichen Fraktion und der kristallinen Fraktion (C2(SF)/C2(CF)) von 2,5 bis 15,0 aufweist.

4. Zusammensetzung nach einem der vorhergehenden Ansprüche mit einem Zugmodul von 1200 MPa bis 2200 MPa, vorzugsweise von 1300 MPa bis 2000 MPa, bestimmt nach ISO 527-2.

5. Zusammensetzung nach einem der vorhergehenden Ansprüche mit einer Charpy Kerbschlagzähigkeit bei 23 °C von 7,5 kJ/m$^2$ bis 55,0 kJ/m$^2$, vorzugsweise von 8,5 bis 50,0 kJ/m$^2$ und/oder einer Charpy Kerbschlagzähigkeit bei -20 °C von 2,5 kJ/m$^2$ bis 10,0 kJ/m$^2$, vorzugsweise von 3,5 bis 7,5 kJ/m$^2$, bestimmt nach ISO 179 1eA bei +23 °C oder -20 °C.

6. Zusammensetzung nach einem der vorhergehenden Ansprüche, die eine oder vorzugsweise alle der folgenden Eigenschaften aufweist

   - einen Gehalt an niedrig siedenden organischen Stoffen (LBS), bestimmt durch Screening der organischen Emissionen mittels Thermodesorptionsanalyse, im Bereich von 5 bis 100 $\mu$g/g, vorzugsweise von 10 bis 75 $\mu$g/g;
   - einen Gehalt an hochsiedenden organischen Stoffen (HBS), bestimmt durch Screening der organischen Emissionen mittels Thermodesorptionsanalyse, im Bereich von 100 bis 500 $\mu$g/g, vorzugsweise von 200 bis 450 $\mu$g/g; und
   - eine Menge an Fogging, bestimmt nach der gravimetrischen Methode DI 75201:2011-11, Methode B, im Bereich von 0,05 bis 1,00 mg, vorzugsweise von 0,15 bis 0,75 mg.

7. Gegenstand, umfassend die Zusammensetzung nach einem der vorhergehenden Ansprüche in einer Menge von 90 Gew.-% bis 100 Gew.-%.

8. Gegenstand nach Anspruch 7, der ein geformter Gegenstand, vorzugsweise ein geformter Gegenstand für die Automobilindustrie, ist.

9. Gegenstand nach Anspruch 7 oder 8 mit einer MSE Oberflächenqualität bei 1,5 s von unter 25, vorzugsweise unter 23 und/oder einer MSE Oberflächenqualität bei 3 s von unter 15, vorzugsweise unter 13 und/oder einer MSE Oberflächenqualität bei 6 s von unter 15, vorzugsweise unter 13, wobei die MSE Oberflächenqualität an Platten mit den Abmessungen 440 × 148 × 2.8 mm, die mit unterschiedlichen Füllzeiten von 1,5, 3 und 6 s mit Korn VW K50 und einem Filmdurchlass von 1,4 mm hergestellt wurden, bestimmt wird, indem die Platten mit einer definierten Lichtquelle (LED) in einer geschlossenen Umgebung beleuchtet werden, ein Bild mit einem CCD-Kamerasystem aufgenommen wird, das Bild analysiert wird und die MSE Oberflächenqualität berechnet wird.

10. Gegenstand nach einem der Ansprüche 7 bis 9 mit einer MSE Oberflächenqualität bei 1,5 s, die die folgende dimensionslose Un-Gleichung (I) erfüllt:

$$\text{MSE, 1,5 s} < 0,00015 \cdot \text{TM} \cdot \text{Charpy NIS, 23°C} + 20$$

wobei
MSE, 1,5 s = MSE Oberflächenqualität bei 1,5 s, ermittelt an Platten mit den Abmessungen 440 × 148 × 2,8 mm, die mit unterschiedlichen Füllzeiten von 1,5 s mit Korn VW K50 und einem Filmdurchlass von 1,4 mm hergestellt wurden, indem die Platten mit einer definierten Lichtquelle (LED) in einer geschlossenen Umgebung beleuchtet, ein Bild mit einem CCD-Kamerasystem aufgenommen, das Bild analysiert und die MSE Oberflächenqualität berechnet wurde
TM = Zugmodul, bestimmt nach ISO 527-2, in [MPa$^{-1}$] und Charpy NIS, 23°C = Charpy Kerbschlagzähigkeit, bestimmt nach ISO 179 1eA bei +23°C, in [m$^2$/kJ].

11. Gegenstand nach einem der Ansprüche 7 bis 10 mit einer MSE Oberflächenqualität bei 3 s, die die folgende dimensionslose Un-Gleichung (II) erfüllt:

$$\text{MSE, 3 s} < -0,5 \cdot \text{Füllstoff} + 15$$

wobei
MSE, 3 s = MSE-Oberflächenqualität bei 3 s, ermittelt an Platten mit den Abmessungen 440 × 148 × 2,8 mm, die mit unterschiedlichen Füllzeiten von 3 s mit Korn VW K50 und einem Filmdurchlass von 1,4 mm hergestellt wurden, indem die Platten mit einer definierten Lichtquelle (LED) in einer geschlossenen Umgebung beleuchtet, ein Bild mit einem CCD-Kamerasystem aufgenommen, das Bild analysiert und die MSE-Oberflächenqualität berechnet wurde, und Füllstoff = der Gehalt an anorganischem Füllstoff (E) in [1/Gew.-%].

**12.** Gegenstand nach einem der Ansprüche 7 bis 11 mit einer Kratzfestigkeit bei 10 N im Bereich von 0,00 bis 1,00, vorzugsweise von 0,10 bis 0,90.

**13.** Verwendung der Zusammensetzung nach einem der Ansprüche 1 bis 6 zum Spritzgießen von Gegenständen, vorzugsweise Automobilgegenständen, insbesondere Automobilinnenraumgegenständen.

**Revendications**

**1.** Composition appropriée pour les applications automobiles

pouvant être obtenue en mélangeant au moins les composants (A), (B), (C), (D) et (E) :

(A) de 5,0 à 40,0 % en poids d'un premier copolymère de propylène hétérophasique ;
(B) de plus de 20,0 à 35,0 % en poids d'un second copolymère de propylène hétérophasique ;
(C) de 10,0 % en poids à 50,0 % en poids d'un mélange de polypropylène et de plastiques mixtes ;
(D) de 2,5 % en poids à 15,0 % en poids d'un plastomère à base d'éthylène ; et
(E) de 2,5 % en poids à moins de 12,5 % en poids d'une charge inorganique ;

où tous les pourcentages se rapportent à la composition totale, et où
le premier copolymère de propylène hétérophasique (A) comprend une phase de matrice et une phase d'élastomère dispersée dans celle-ci et présente

- un indice de fluidité à chaud ($MFR_2$), déterminé selon la norme ISO 1133 à 230 °C et à 2,16 kg, dans la plage de 90 à 250 g/10 min ; et
- une viscosité intrinsèque, déterminée selon la norme DIN ISO 1628/1, de la fraction soluble (iV(SF)), conformément à une analyse CRYSTEX QC, dans la plage de 1,50 à 4,00 dl/g ;

le second copolymère de propylène hétérophasique (B) comprend une phase de matrice et une phase d'élastomère dispersée dans celle-ci et présente

- un indice de fluidité à chaud $MFR_2$, déterminé selon la norme ISO 1133 à 230 °C et à 2,16 kg, dans la plage de 3,0 à 30 g/10 min et
- une viscosité intrinsèque, déterminée selon la norme DIN ISO 1628/1, de la fraction soluble (iV(SF)), conformément à une analyse CRYSTEX QC, dans la plage de 4,10 à 10,00 dl/g ;

le mélange de polypropylène et de plastiques mixtes (C) présente

- une teneur en fraction cristalline (CF) déterminée conformément à une analyse CRYSTEX QC dans la plage de 85,0 à 96,0 % en poids, et
- une teneur en fraction soluble (SF) déterminée conformément à une analyse CRYSTEX QC dans la plage de 4,0 à 15,0 % en poids, où
- ladite fraction cristalline (CF) présente une teneur en éthylène (C2(CF)), telle que déterminée par spectroscopie FT-IR étalonnée par spectroscopie RMN $^{13}$C quantitative, dans la plage de 1,0 à 10,0 % en poids ; et
- ladite fraction soluble (SF) présente une viscosité intrinsèque (iV(SF)) dans la plage de 0,9 à 2,1 dl/g ;

le plastomère à base d'éthylène (D) étant un copolymère d'éthylène avec des motifs comonomères choisis parmi les alpha-oléfines ayant de 3 à 12 atomes de carbone, de préférence parmi les alpha-oléfines ayant de 4 à 10 atomes de carbone, de manière préférée entre toutes parmi le 1-octène, présente

- un indice de fluidité à chaud $MFR_2$ de 0,2 à 2,5 g/10 min, déterminé selon la norme ISO 1133 à 190 °C et à 2,16 kg ; et
- une masse volumique de 850 à 870 kg/m$^3$, déterminée selon la norme ISO 1183 ; et

la composition présente un indice de fluidité à chaud $MFR_2$, déterminé selon la norme ISO 1133 à 230 °C et à 2,16 kg, dans la plage de 5,0 à moins de 20,0 g/10 min.

**2.** Composition selon la revendication 1, dans laquelle la charge inorganique (E) est du talc présentant

   - une taille médiane de particule $d_{50}$ avant mélange de 0,3 à 30,0 micromètres, de préférence de 1,5 à 15,0 micromètres ; et/ou
   - une taille de particule de coupe supérieure $d_{95}$ avant mélange de 1,0 à 50,0 micromètres, de préférence de 5,0 à 35,0 micromètres.

**3.** Composition selon les revendications 1 ou 2 présentant une fraction cristalline (CF) et une fraction soluble (SF) dans l'analyse CRYSTEX QC, où

   - une teneur en fraction cristalline (CF) déterminée conformément à une analyse CRYSTEX QC est dans la plage de 65,0 à 85,0 % en poids, et
   - une teneur en fraction soluble (SF) déterminée conformément à une analyse CRYSTEX QC est dans la plage de 15,0 à 35,0 % en poids, où
   - ladite fraction cristalline (CF) présente une teneur en éthylène (C2(CF)), telle que déterminée par spectroscopie FT-IR étalonnée par spectroscopie RMN $^{13}$C quantitative, dans la plage de 1,0 à 10,0 % en poids ; et/ou
   - ladite fraction cristalline (CF) présente une viscosité intrinsèque (iV(CF)), déterminée selon la norme DIN ISO 1628/1, inférieure à 2,0 dl/g ; et/ou
   - ladite fraction soluble (SF) présente une teneur en éthylène (C2(SF)), telle que déterminée par spectroscopie FT-IR étalonnée par spectroscopie RMN $^{13}$C quantitative, dans la plage de 30 à 50 % en poids ; et/ou
   - ladite fraction soluble (SF) présente une viscosité intrinsèque (iV(SF)), déterminée selon la norme DIN ISO 1628/1, supérieure à 2,1 dl/g ; et/ou
   - la composition présente un rapport viscosité intrinsèque de la fraction soluble sur viscosité intrinsèque de la fraction cristalline (iV(SF)/iV(CF)) supérieur à 1,0 ; et/ou
   - la composition présente un rapport des teneurs en éthylène de la fraction soluble et de la fraction cristalline (C2(SF)/C2(CF)) de 2,5 à 15,0.

**4.** Composition selon l'une des revendications précédentes présentant un module de traction de 1200 MPa à 2200 MPa, de préférence de 1300 MPa à 2000 MPa, déterminé selon la norme ISO 527-2.

**5.** Composition selon l'une des revendications précédentes présentant une résistance aux chocs Charpy avec entaille à 23 °C de 7,5 kJ/m$^2$ à 55,0 kJ/m$^2$, de préférence de 8,5 à 50,0 kJ/m$^2$ et/ou une résistance aux chocs Charpy avec entaille à -20 °C de 2,5 kJ/m$^2$ à 10,0 kJ/m$^2$, de préférence de 3,5 à 7,5 kJ/m$^2$, déterminée selon la norme ISO 179 1eA à +23 °C ou -20 °C.

**6.** Composition selon l'une des revendications précédentes présentant une ou plusieurs, de préférence la totalité, des propriétés suivantes :

   - une teneur en substances organiques à point d'ébullition bas (LBS), déterminée par criblage des émissions organiques par analyse par thermodésorption, dans la plage de 5 à 100 μg/g, de préférence de 10 à 75 μg/g ;
   - une teneur en substances organiques à point d'ébullition haut (HBS), déterminée par criblage des émissions organiques par analyse par thermodésorption, dans la plage de 100 à 500 μg/g, de préférence de 200 à 450 μg/g ; et
   - une quantité de buée, déterminée selon le procédé gravimétrique DI 75201:2011-11, procédé B, dans la plage de 0,05 à 1,00 mg, de préférence de 0,15 à 0,75 mg.

**7.** Article comprenant la composition selon l'une des revendications précédentes en une quantité de 90 % en poids à 100 % en poids.

**8.** Article selon la revendication 7 qui est un article moulé, de préférence un article automobile moulé.

**9.** Article selon les revendications 7 ou 8 présentant une qualité de surface MSE à 1,5 s inférieure à 25, de préférence inférieure à 23 et/ou une qualité de surface MSE à 3 s inférieure à 15, de préférence inférieure à 13 et/ou une qualité de surface MSE à 6 s inférieure à 15, de préférence inférieure à 13, dans lequel la qualité de surface MSE est déterminée sur des plaques dont les dimensions sont 440×148×2,8 mm, qui ont été produites avec différents temps de remplissage de 1,5, 3 et 6 s avec un grain VW K50 et une entrée en voile de 1,4 mm, en éclairant les plaques avec une source lumineuse définie (LED) dans un environnement fermé, en enregistrant une image avec un système de caméra CCD, en analysant l'image et en calculant la qualité de surface MSE.

**10.** Article selon l'une des revendications 7 à 9 présentant une qualité de surface MSE à 1,5 s répondant à l'inéquation (I) sans dimension suivante :

$$\text{MSE, 1,5 s} < 0{,}00015 \cdot \text{TM} \cdot \text{Charpy NIS, 23°C} + 20$$

dans laquelle

MSE, 1,5 s = qualité de surface MSE à 1,5 s, déterminée sur des plaques dont les dimensions sont $440{\times}148{\times}2{,}8$ mm, qui ont été produites avec différents temps de remplissage de 1,5 s avec un grain VW K50 et une entrée en voile de 1,4 mm, en éclairant les plaques avec une source lumineuse définie (LED) dans un environnement fermé, en enregistrant une image avec un système de caméra CCD, en analysant l'image et en calculant la qualité de surface MSE

TM = module de traction, déterminé selon la norme ISO 527-2, en [MPa$^{-1}$] et Charpy NIS, 23°C = résistance aux chocs Charpy avec entaille, déterminée selon la norme ISO 179 1eA à +23 °C, en [m$^2$/kJ].

**11.** Article selon l'une des revendications 7 à 10 présentant une qualité de surface MSE à 3 s répondant à l'inéquation (II) sans dimension suivante :

$$\text{MSE, 3 s} < -0{,}5 \cdot \text{charge} + 15$$

dans laquelle
MSE, 3 s = qualité de surface MSE à 3 s, déterminée sur des plaques dont les dimensions sont $440{\times}148{\times}2{,}8$ mm, qui ont été produites avec différents temps de remplissage de 3 s avec un grain VW K50 et une entrée en voile de 1,4 mm, en éclairant les plaques avec une source lumineuse définie (LED) dans un environnement fermé, en enregistrant une image avec un système de caméra CCD, en analysant l'image et en calculant la qualité de surface MSE, et charge = la teneur en charge inorganique (E) en [1/% en poids].

**12.** Article selon l'une des revendications 7 à 11 présentant une résistance aux rayures à 10 N dans la plage de 0,00 à 1,00, de préférence de 0,10 à **0,90.**

**13.** Utilisation de la composition selon l'une des revendications 1 à 6 pour le moulage par injection d'articles, de préférence d'articles automobiles, de manière davantage préférée d'articles intérieurs automobiles.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2022258576 A1
- WO 2002258578 A1
- WO 2022034127 A1
- EP 4194504 A1
- EP 3786190 A1

- WO 2010149529 A1
- EP 491566 A
- EP 591224 A
- EP 586390 A

### Non-patent literature cited in the description

- **LJILJANA JEREMIC** ; **ANDREAS ALBRECHT** ; **MARTINA SANDHOLZER** ; **MARKUS GAHLEIT-NER**. Rapid characterization of high-impact ethylene-propylene copolymer composition by crystallization extraction separation: comparability to standard separation methods. *International Journal of Polymer Analysis and Characterization*, 2020, vol. 25 (8), 581-596
- **CHENG, H. N.** *Macromolecules*, 1984, vol. 17, 1950
- **WANG, W-J.** ; **ZHU, S.** *Macromolecules*, 2000, vol. 33, 1157

- **THOMAS KOCH** ; **DORIS MACHL**. Evaluation of scratch resistance in multiphase PP blends. Polymer Testing, 2007, vol. 26, 927-936
- **SYBILLE FRANK et al.** *PPS 25 Intern. Conf. Polym. Proc. Soc*, 2009
- *roceedings of the SPIE*, 2008, vol. 6831
- *CHEMICAL ABSTRACTS*, 6683-19-8
- *CHEMICAL ABSTRACTS*, 31570-04-4
- *CHEMICAL ABSTRACTS*, 2082-79-3
- *CHEMICAL ABSTRACTS*, 25036-25-3